(19) Europäisches Patentamt / European Patent Office / Office européen des brevets

(11) **EP 1 523 824 B1**

(12) **FASCICULE DE BREVET EUROPEEN**

(45) Date de publication et mention
de la délivrance du brevet:
**02.02.2011 Bulletin 2011/05**

(21) Numéro de dépôt: **03748214.8**

(22) Date de dépôt: **16.07.2003**

(51) Int Cl.:
***H04L 9/32*** *(2006.01)*

(86) Numéro de dépôt international:
**PCT/FR2003/002251**

(87) Numéro de publication internationale:
**WO 2004/010642 (29.01.2004 Gazette 2004/05)**

(54) **PROCEDE DE SIGNATURE DE LISTE ET APPLICATION AU VOTE ELECTRONIQUE**

VERFAHREN ZUR LISTENUNTERSCHRIFT UND ANWENDUNG BEI EINER ELEKTRONISCHEN WAHL

LIST SIGNATURE METHOD AND APPLICATION TO ELECTRONIC VOTING

(84) Etats contractants désignés:
**AT BE BG CH CY CZ DE DK EE ES FI FR GB GR HU IE IT LI LU MC NL PT RO SE SI SK TR**

(30) Priorité: **19.07.2002 FR 0209218**

(43) Date de publication de la demande:
**20.04.2005 Bulletin 2005/16**

(73) Titulaire: **FRANCE TELECOM**
**75015 Paris (FR)**

(72) Inventeurs:
- **CANARD, Sébastien**
 **F-14000 Caen (FR)**
- **GIRAULT, Marc**
 **F-14000 Caen (FR)**
- **TRAORE, Jacques**
 **F-61100 Saint Georges des Groseillers (FR)**

(74) Mandataire: **Pecher, Gilles et al**
**Cabinet Beau de Loménie**
**158, rue de l'Université**
**75340 Paris Cedex 07 (FR)**

(56) Documents cités:
**US-A1- 2001 011 351**

- **ATENIESE G ET AL: "A PRACTICAL AND PROVABLY SECURE COALITION-RESISTANT GROUP SIGNATURESCHEME" ADVANCES IN CRYPTOLOGY. CRYPTO 2000. 20TH ANNUAL INTERNATIONAL CRYPTOLOGY CONFERENCE, SANTA BARBARA, CA, AUG. 20 - 24, 2000. PROCEEDINGS, LECTURE NOTES IN COMPUTER SCIENCE;VOL. 1880, BERLIN: SPRINGER, DE, 20 août 2000 (2000-08-20), pages 255-270, XP001003407 ISBN: 3-540-67907-3 cité dans la demande**

**Description**

La présente invention concerne le domaine général de la sécurité des services accessible par un réseau de transmission de données numériques, et plus précisément le domaine de la signature électronique.

Elle s'applique notamment, mais non exclusivement au vote électronique ou encore à la pétition électronique.

La signature électronique d'un message met en oeuvre un mécanisme relevant de la cryptographie dite à clé publique : le signataire qui possède une clé secrète ou privée et une clé publique associée, peut produire une signature de message à l'aide de la clé secrète. Pour vérifier la signature, il suffit de disposer de la clé publique.

Dans certaines applications comme le vote électronique, le signataire doit pouvoir rester anonyme. A cet effet, on a mis au point ce que l'on appelle la signature électronique anonyme permettant à l'aide d'une clé publique de déterminer si le signataire d'un message possède certains droits (droit de signer le message, droit de posséder la clé secrète ayant été utilisée pour signer le message, etc.), tout en préservant l'anonymat du signataire. En outre, dans les applications de vote ou de pétition électronique, chaque personne autorisée ne doit pouvoir signer qu'une seule fois.

Parmi les signatures anonymes, il existe également ce que l'on appelle la signature aveugle permettant à une personne d'obtenir la signature d'un message d'une autre entité, sans que celle-ci ait à connaître le contenu du message et puisse établir plus tard le lien entre la signature et l'identité du signataire. Cette solution de signature aveugle nécessite donc l'intervention d'une entité intermédiaire qui produit les signatures. Dans les applications comme le vote ou la pétition électronique, cette solution fait intervenir une autorité habilitée qui signe le vote de chaque électeur ou la pétition pour chaque pétitionnaire.

On a également proposé le concept de signature de groupe qui permet à chaque membre d'un groupe de produire une signature telle qu'un vérificateur possédant une clé publique adéquate peut vérifier que la signature a été émise par un membre du groupe sans pouvoir déterminer l'identité du signataire. Ce concept est par exemple décrit dans le document :

[1] "A Practical and Provably Secure Coalition-Résistant Group Signature Scheme" de G. Ateniese, J Camenisch, M. Joye et G. Tsudik, in M. Bellare, Editor, Advance in Cryptology - CRYPTO 2000, vol. 1880 of LNCS, p. 255-270, Springer-Verlag 2000.

Cependant, dans ce concept, une autorité de confiance peut lever à tout moment cet anonymat et déterminer l'identité d'une personne du groupe ayant émis une signature. En outre, ce type de signature est dit "non reliable", c'est-à-dire qu'il ne permet pas de déterminer si oui ou non deux signatures ont été émises par la même personne sans lever l'anonymat de la signature. Les signatures de groupe sont utilisées dans de nombreuses applications, telles que la vente aux enchères électronique, la monnaie électronique ou encore le vote électronique. La signature de groupe ne convient pas parfaitement à cette dernière application puisqu'elle autorise une autorité de confiance à accéder à l'identité d'un signataire, et ne permet pas de relier deux signatures émises par une même personne sans déterminer l'identité du signataire. En outre, le document [1] ne prévoit pas de processus de révocation d'un membre du groupe.

Pour remédier à ce dernier inconvénient, le document [2] "Efficient Revocation of Anonymous Group membership Certificates and Anonymous Credentials" de J. Camenisch et A. Lysyanskaya, publié par Cryptologie ePrint Archive IACR. 2002, prévoit d'ajouter à ce concept un processus de révocation (ce document sera aussi publié par M. Jung, Editor CRYPTO 2002, Springer-Verlag 2002). Toutefois, cette solution n'apporte pas de solution aux problèmes de la préservation de l'anonymat du signataire et de "reliabilité" de deux signatures.

Dans une application de vote électronique, il est en outre nécessaire pour assurer une sécurité se rapprochant au maximum du vote traditionnel, de garantir les propriétés suivantes.

Nul ne doit être capable de connaître même partiellement les résultats du scrutin avant sa clôture. Tout le monde doit pouvoir se convaincre de la validité du résultat final du scrutin. Enfin, une autorité habilitée doit être capable de retirer ou de révoquer le droit de vote d'une personne.

Qu'il s'agisse du vote hors ligne, c'est-à-dire de l'utilisation d'une machine à voter électronique installée dans un bureau de vote, ou du vote en ligne, c'est-à-dire à distance, via le réseau Internet par exemple, les systèmes proposés actuellement, utilisant une signature de groupe telle que décrite dans le document [1] et complétée dans le document [2], ne remplissent pas ces conditions, mis à part la révocation du droit de signature.

Par ailleurs, l'application du concept de signature aveugle au vote électronique est une solution dont la mise en oeuvre est lourde, car elle oblige l'électeur à se connecter plusieurs fois à chaque élection. En outre, si le scrutin se passe mal, on ne peut pas déterminer qui en est le responsable : un électeur ou l'organisateur du scrutin.

On a également proposé, notamment dans le document [3] "Untraceable Electronic Mail Return Addresses and Digital Pseudonym" de D. Chaum, ACM 1981, le concept de réseaux mélangeurs, chaque mélangeur étant une fonction produisant une liste de nombres déchiffrés à partir d'une liste de nombres chiffrés, tout en cachant la correspondance entre les nombres chiffrés et les nombres déchiffrés. Appliquée au vote électronique, cette technique présente l'inconvénient majeur de ne pas permettre de vérifier la validité d'un vote sans compromettre le secret de celui-ci.

Dans le document [4] "A Secure and Optimal Efficient Multi-Authority Election Scheme", de Cramer, Gennaro, et Schoenmakers, Eurocrypt'97, LNCS - Springer-Verlag, il est décrit ce que l'on appelle le chiffrement homomorphe permettant d'effectuer des calculs de base sur des nombres chiffrés. Les solutions basées sur ce procédé ne sont cependant pas applicables aux scrutins impliquant un grand nombre d'électeurs.

La présente invention a pour but de supprimer cet inconvénient. Cet objectif est atteint par la prévision d'un procédé de signature de liste comprenant au moins :

- une phase d'organisation consistant pour une autorité de confiance à définir des paramètres de mise en oeuvre d'une signature électronique anonyme, dont une clé privée et une clé publique correspondante,
- une phase d'enregistrement de personnes dans une liste de membres autorisés à générer une signature électronique propre aux membres de la liste, au cours de laquelle chaque personne à enregistrer calcule une clé privée à l'aide de paramètres fournis par l'autorité de confiance et de paramètres choisis aléatoirement par la personne à enregistrer, et l'autorité de confiance délivre à chaque personne à enregistrer un certificat de membre de la liste,
- une phase de signature au cours de laquelle un membre de la liste génère et émet une signature propre aux membres de la liste, cette signature étant construite de manière à contenir une preuve que le membre de la liste ayant émis la signature, connaît un certificat de membre de la liste, et
- une phase de vérification de la signature émise comprenant des étapes d'application d'un algorithme prédéfini pour mettre en évidence la preuve que la signature a été émise par une personne en possession d'un certificat de membre de la liste.

Selon l'invention, ce procédé comprend en outre :

- une phase de définition d'une séquence consistant pour l'autorité de confiance à générer un numéro de séquence à utiliser dans la phase de signature, une signature générée durant la phase de signature comprenant un élément de signature qui est commun à toutes les signatures émises par un même membre de la liste avec un même numéro de séquence et qui contient une preuve que le numéro de séquence à été utilisé pour générer la signature, la phase de vérification comprenant en outre une étape de vérification de la preuve que le numéro de séquence a été utilisé pour générer la signature;
- une phase de révocation d'un membre de la liste pour retirer un membre de la liste, au cours de laquelle l'autorité de confiance retire de la liste le membre à retirer et met à jour les paramètres de mise en oeuvre de la signature électronique anonyme, pour tenir compte du retrait du membre de la liste; et
- une phase de mise à jour des certificats des membres de la liste pour tenir compte de modifications de la composition de la liste.

Selon un mode de réalisation de l'invention, la phase d'organisation comprend la définition d'un paramètre commun dépendant de la composition de la liste, la phase d'enregistrement d'une personne dans la liste comprenant la définition d'un paramètre propre à la personne à enregistrer qui est calculé en fonction du paramètre dépendant de la composition de la liste et qui est intégré au certificat remis à la personne, la phase d'enregistrement comprenant une étape de mise à jour du paramètre commun dépendant de la composition de la liste, la phase de révocation d'un membre de la liste comprenant une étape de modification du paramètre commun dépendant de la composition de la liste, pour tenir compte du retrait du membre de la liste, et la phase de mise à jour des certificats des membres de la liste comportant une étape de mise à jour du paramètre propre à chaque membre de la liste pour tenir compte des modifications de la composition de la liste.

Selon un mode de réalisation de l'invention, une signature propre à un membre de la liste et possédant le certificat $[A_i, e_i]$ comprend des paramètres $T_1$, $T_2$, $T_3$ tels que :

$$T_1 = A_i b^{\omega} \ (\text{mod } n),$$

$$T_2 = g^{\omega} \ (\text{mod } n),$$

$$T_3 = g e_i h^{\omega} \ (\text{mod } n),$$

$\omega$ étant un nombre choisi aléatoirement lors de la phase de signature, et b, g, h et n étant des paramètres généraux de mise en oeuvre de la signature de groupe, tels que les paramètres b, g et h ne peuvent pas se déduire les uns des autres par des fonctions d'élévation de puissance entière modulo n, de sorte que le nombre $A_i$, et donc l'identité du membre de la liste possédant le certificat $[A_i, e_i]$ ne peut pas se déduire d'une signature émise par le membre.

De préférence, le numéro d'une séquence utilisé pour générer une signature de liste est calculé en fonction d'une date de début de séquence.

Avantageusement, la fonction de calcul du numéro d'une séquence est de la forme :

$$F(d) = (H(d))^2 \ (mod \ n)$$

dans laquelle H est une fonction de hachage résistante aux collisions, d est la date de début de la séquence, et n est un paramètre général de mise en oeuvre de la signature de groupe.

Selon un mode de réalisation de l'invention, une signature émise par un membre de la liste contient un paramètre qui est calculé en fonction du numéro de séquence et de la clé privée du membre signataire.

Selon un mode de réalisation de l'invention, le paramètre $T_4$ d'une signature émise par un membre de la liste et dépendant du numéro de séquence m et de la clé privée $x_i$ du membre signataire est obtenu par la formule suivante :

$$T_4 = m^{x_i} \ (mod \ n)$$

n étant un paramètre général de mise en oeuvre de la signature de groupe, et la signature comprenant la preuve que le paramètre $T_4$ a été calculé avec la clé privée $x_i$ du membre de la liste qui a émis la signature.

L'invention concerne également un procédé de vote électronique comprenant une phase d'organisation des élections, au cours de laquelle une autorité organisatrice procède à la génération de paramètres nécessaires à un scrutin, et attribue à des scrutateurs des clés leur permettant de déchiffrer et vérifier des bulletins de vote, une phase d'attribution d'un droit de signature à chacun des électeurs, une phase de vote au cours de laquelle les électeurs signent un bulletin de vote, et une phase de dépouillement au cours de laquelle les scrutateurs vérifient les bulletins de vote, et calculent le résultat du scrutin en fonction du contenu des bulletins de vote déchiffrés et valides.

Selon l'invention, ce procédé met en oeuvre un procédé de signature de liste tel que défini ci-avant, pour signer les bulletins de vote, chaque électeur étant enregistré comme membre d'une liste, et un numéro de séquence étant généré pour le scrutin, pour détecter si un même électeur a émis ou non plusieurs bulletins de vote pour le scrutin.

Selon un mode de réalisation de l'invention, la phase d'organisation comprend la remise à chaque scrutateur d'une clé publique et d'une clé privée, les bulletins de vote étant chiffrés à l'aide d'une clé publique obtenue par le produit des clés publiques respectives de tous les scrutateurs, et la clé privée de déchiffrement correspondante étant obtenue en calculant la somme de clés privées respectives de tous les scrutateurs.

Avantageusement, le chiffrement des bulletins de vote est effectué à l'aide d'un algorithme de chiffrement probabiliste.

Selon un mode de réalisation de l'invention, les bulletins de vote émis par les électeurs sont stockés dans une base de données publique, le résultat de la vérification et du dépouillement de chaque bulletin de vote étant stocké dans la base de données en association avec le bulletin de vote, et la clé privée de déchiffrement des bulletins de vote étant publiée.

L'invention concerne également un calculateur pour la mise en oeuvre d'une signature de liste, comprenant des moyens pour :

- générer des paramètres de mise en oeuvre d'une signature électronique anonyme propre aux membres d'une liste, les paramètres comportant une clé privée et une clé publique correspondante; et
- transmettre à chaque personne à enregistrer dans la liste, des paramètres à utiliser par la personne à enregistrer pour calculer une clé privée, et un
- certificat de membre de la liste.

Selon l'invention, le calculateur comprend en outre des moyens pour :

- générer un numéro de séquence à utiliser par les membres de la liste pour émettre une signature anonyme propre aux membres de la liste, une signature anonyme émise par un membre de la liste comprenant un élément de signature qui est commun à toutes les signatures émises par le même membre de la liste avec un même numéro de séquence, et qui contient une preuve que le numéro de séquence a été utilisé pour générer la signature;
- retirer de la liste un membre à révoquer de la liste, et mettre à jour les paramètres de mise en oeuvre de la signature électronique anonyme propre aux membres de la liste, pour tenir compte du retrait du membre de la liste; et

- mettre à jour les certificats des membres de la liste à chaque modification de la composition de la liste.

L'invention concerne également un calculateur pour la mise en oeuvre d'un procédé de vote électronique, comprenant des moyens pour :

- générer au cours d'une phase d'organisation d'un scrutin des paramètres de mise en oeuvre d'une signature électronique anonyme propre aux membres d'une liste d'électeurs, les paramètres comportant une clé privée et une clé publique correspondante;
- attribuer à des scrutateurs des clés leur permettant de déchiffrer et vérifier des bulletins de vote émis pour le scrutin; et
- transmettre à chaque membre de la liste d'électeurs du scrutin des paramètres à utiliser par l'électeur pour calculer une clé privée, et un certificat de membre de la liste d'électeurs du scrutin.

Selon l'invention, le calculateur comprend en outre des moyens pour :

- générer un numéro de séquence propre au scrutin à utiliser par les membres de la liste d'électeurs pour signer un bulletin de vote, une signature d'un bulletin de vote comprenant un élément de signature qui est commun à toutes les signatures émises avec un même numéro de séquence par un même membre de la liste d'électeurs du scrutin, et qui contient une preuve que le numéro de séquence a été utilisé pour générer la signature;
- retirer de la liste un électeur du scrutin à révoquer, et mettre à jour les paramètres de mise en oeuvre de la signature électronique anonyme propre aux membres de la liste d'électeurs du scrutin, pour tenir compte du retrait de l'électeur; et
- mettre à jour les certificats des électeurs du scrutin à chaque modification de la composition de la liste des électeurs du scrutin.

L'invention concerne également un terminal pour émettre une signature de liste comprenant des moyens pour :

- recevoir des paramètres de calcul d'une clé privée;
- calculer la clé privée à l'aide des paramètres reçus et de paramètres choisis aléatoirement;
- recevoir un certificat de membre d'une liste;
- générer une signature propre aux membres de la liste, cette signature étant construite de manière à contenir une preuve que le membre de la liste ayant émis la signature, connaît un certificat de membre de la liste; et
- vérifier une signature émise par un membre de la liste en appliquant un algorithme prédéfini pour mettre en évidence la preuve que la signature a été émise par une personne en possession d'un certificat de membre de la liste.

Selon l'invention, le terminal comprend en outre des moyens pour :

- recevoir un numéro de séquence à utiliser dans une phase de signature;
- générer une signature en calculant un élément de signature qui est commun à toutes les signatures émises par un même membre de la liste avec un même numéro de séquence, et qui contient une preuve que le numéro de séquence a été utilisé pour générer la signature;
- vérifier la preuve que le numéro de séquence a été utilisé pour générer une signature; et
- recevoir un nouveau certificat de membre de la liste à chaque modification de la composition de la liste.

L'invention concerne également un terminal pour émettre une signature de bulletin de vote à un scrutin, comprenant des moyens pour :

- recevoir des paramètres de calcul d'une clé privée;
- calculer la clé privée à l'aide des paramètres reçus et de paramètres choisis aléatoirement;
- recevoir un certificat de membre d'une liste d'électeurs du scrutin;
- générer une signature d'un bulletin de vote, cette signature étant construite de manière à contenir une preuve que le membre de la liste ayant émis la signature, connaît un certificat de membre de la liste d'électeurs; et
- vérifier une signature d'un bulletin de vote, émise par un membre de la liste d'électeur, en appliquant un algorithme prédéfini pour mettre en évidence la preuve que la signature a été émise par une personne en possession d'un certificat de membre de la liste.

Selon l'invention, le terminal comprend en outre des moyens pour :

- recevoir un numéro de séquence à utiliser pour signer un bulletin de vote;
- générer une signature d'un bulletin de vote en calculant un élément de signature qui est commun à toutes les signatures émises par un même membre de la liste d'électeurs avec un même numéro de séquence, et qui contient une preuve que le numéro de séquence a été utilisé pour générer la signature;
- vérifier la preuve que le numéro de séquence a été utilisé pour générer une signature d'un bulletin de vote; et
- recevoir un nouveau certificat de membre de la liste d'électeurs à chaque modification de la composition de la liste d'électeurs.

Un mode de réalisation préféré de l'invention sera décrit ci-après, à titre d'exemple non limitatif, avec référence aux dessins annexés dans lesquels :

La figure 1 représente un système permettant la mise en oeuvre des procédés de signature de liste et de vote électronique, selon l'invention ;

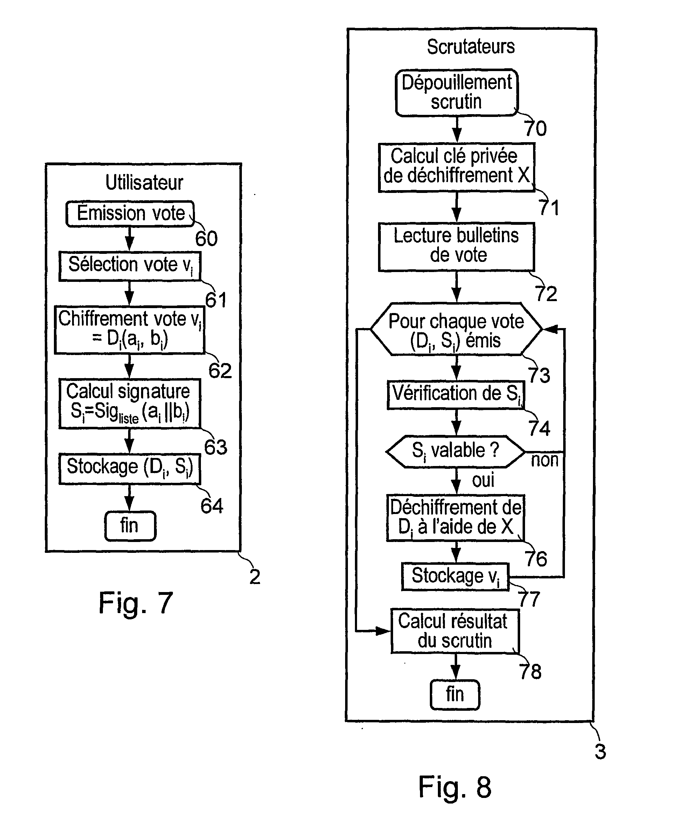

Les figures 2 à 8 illustrent sous la forme d'organigrammes les différentes procédures qui sont exécutées conformément aux procédés de signature de liste et de vote électronique, selon l'invention.

La présente invention propose un procédé de signature de liste dans lequel toutes les personnes autorisées, c'est-à-dire appartenant à la liste, peuvent produire une signature qui est anonyme, et n'importe qui est capable de vérifier la validité de la signature sans avoir accès à l'identité du membre de la liste qui a signé.

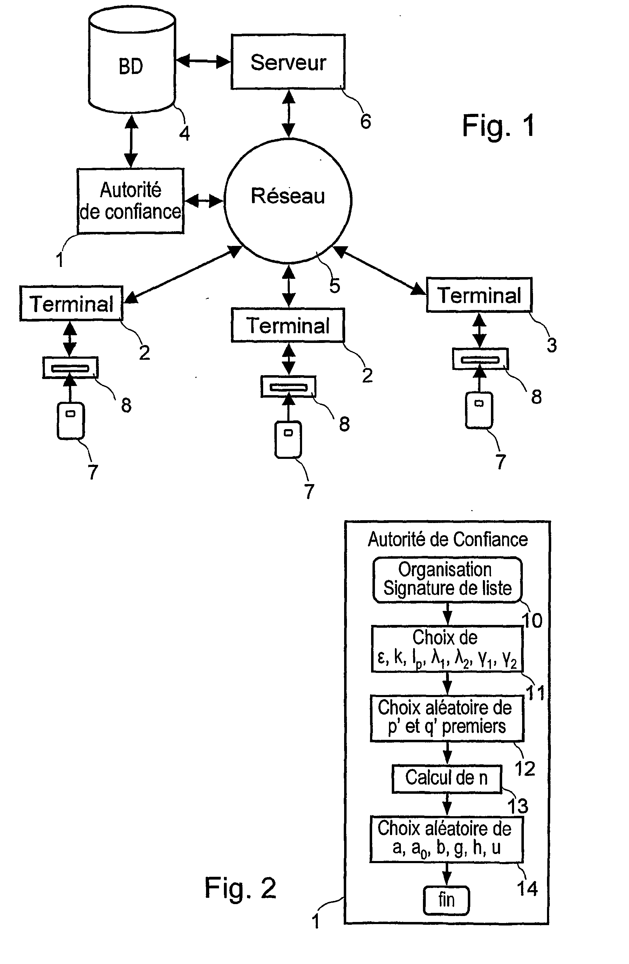

Un tel procédé peut être mis en oeuvre dans le système représenté sur la figure 1. Ce système comprend des terminaux 2 mis à la disposition des utilisateurs et connectés à un réseau de transmission 5 de données numériques, tel que le réseau Internet. Chaque terminal 2 est avantageusement connecté à un lecteur 8 de carte à puce 7. Par le réseau 5, les utilisateurs peuvent se connecter à un serveur 6 donnant accès à des informations par exemple stockées dans une base de données 4. Ce système comprend également un calculateur 1 d'une autorité de confiance qui délivre notamment les cartes à puces 7 aux utilisateurs.

Le procédé de signature de liste selon l'invention reprend dans le procédé de signature de groupe décrit dans le document référencé [1], les procédures suivantes :

- une procédure l'organisation d'un groupe de signataires, qui consiste à mettre en place les différents paramètres et clés publiques nécessaires,
- une procédure d'enregistrement dans laquelle une personne à inscrire dans le groupe reçoit d'une autorité de confiance un droit de signature, c'est-à-dire une clé privée et un certificat autorisés,
- une procédure de signature proprement dite au cours de laquelle une personne possédant un droit de signature signe un message, et
- une procédure de vérification consistant à appliquer un algorithme de vérification à une signature pour vérifier que la signature a été produite par une personne possédant un droit de signature.

L'invention prévoit en outre une disposition pour garantir l'anonymat d'un signataire, même vis-à-vis d'une autorité de confiance, ainsi qu'une procédure d'organisation d'une séquence consistant à définir un numéro de séquence à utiliser pour générer des signatures de liste, la vérification d'une signature comprenant en outre une étape de vérification que la signature est unique pour un numéro de séquence donné.

Le procédé selon l'invention peut également comporter une procédure de révocation, telle que définie dans le document référencé [2]. A l'aide de cette procédure de révocation, une autorité de confiance peut retirer à un membre de la liste, les droits de signature qu'elle lui a précédemment attribués, à partir de l'identité du membre. La mise en place de cette possibilité de révocation implique l'exécution par les membres de la liste d'une procédure de mise à jour au cours de laquelle les membres de la liste mettent à jour leurs certificats pour prendre en compte les modifications (ajout ou retraits) effectuées dans la liste des personnes autorisées à signer.

La figure 2 illustre les différentes étapes de la procédure d'organisation 10 exécutée sur le calculateur 1 de l'autorité de confiance.

Conformément au document référencé [1], cette procédure consiste à choisir 11 des nombres entiers suivants :

- $\varepsilon > 1$, $k$, $I_p$,
- $\lambda_1$, $\lambda_2$, $\gamma_1$, $\gamma_2$ qui sont des longueurs de nombres entiers en nombres de bits, avec :

$$\lambda_2 > 4I_p \qquad\qquad (1)$$

$$\lambda_1 > \varepsilon(\lambda_2 + k) + 2 \qquad\qquad (2)$$

$$\gamma_2 > \lambda_1 + 2 \qquad\qquad (3)$$

$$\gamma_1 > \varepsilon(\gamma_2 + k) + 2 \qquad\qquad (4)$$

et à définir les ensembles de nombres entiers suivants :

$$\Lambda = ]2^{\lambda_1} - 2^{\lambda_2}, 2^{\lambda_1} + 2^{\lambda_2}[$$

et

$$\Gamma = ]2^{\gamma_1} - 2^{\gamma_2}, 2^{\gamma_1} + 2^{\gamma_2}[.$$

Cette procédure consiste également à choisir une fonction de hachage résistante aux collisions *H* telle qu'une séquence binaire de longueur quelconque notée $\{0, 1\}^*$ est transformée en une séquence binaire de longueur k notée $\{0, 1\}^k$.

Ensuite, le calculateur 1 de l'autorité de confiance génère aléatoirement, à l'étape 12, des nombres premiers p' et q' de taille $l_p$, tels que p = 2p' + 1 et q = 2q' + 1 sont aussi des nombres premiers. Ensuite, il calcule à l'étape 13 le module n = pq et génère aléatoirement à l'étape 14 des nombres entiers a, $a_0$, b, g et h dans l'ensemble QR(n) des résidus quadratiques de n, c'est-à-dire l'ensemble des nombres entiers y tels $y = x^2$ (mod n), x étant un nombre entier. On considère alors que la clé publique PK de l'autorité de confiance est constituée de la séquence de nombres entiers (n, a, $a_0$, b, g, h) et que la clé privée de celle-ci est constituée de la séquence de nombres entiers (p', q').

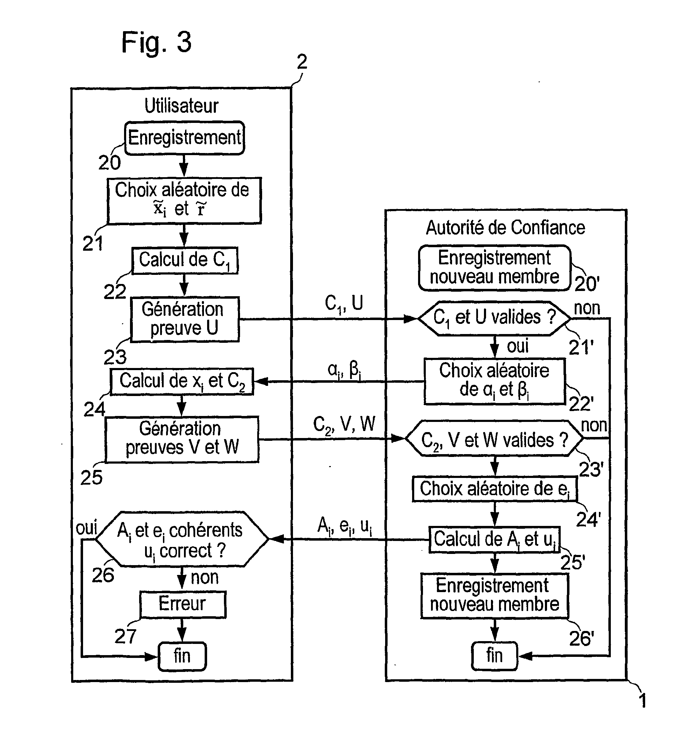

Pour être enregistré par l'autorité de confiance, un utilisateur souhaitant devenir membre de la liste exécute sur son terminal 2 la procédure 20 illustrée sur la figure 3. L'exécution de cette procédure engage un dialogue avec le calculateur 1 de l'autorité de confiance qui exécute alors une procédure 20'. La procédure 20 comprend tout d'abord une étape 21 de génération aléatoire de nombres entiers $\tilde{x}_i$ et $\tilde{r}$, respectivement dans les intervalles $]0, 2^{\lambda_2}[$ et $]0, n^2[$. A partir de ces nombres entiers, on calcule 22 un nombre entier $C_1$ tel que :

$$C_1 = g^{\tilde{x}_i} h^{\tilde{r}} (mod\, n) \qquad\qquad (5)$$

A l'étape 23, on construit la preuve U de la connaissance de deux nombres $\alpha$ et $\beta$ (c'est-à-dire $\tilde{x}_i$ et $\tilde{r}$) tels que $C_1 = g^{\alpha} h^{\beta}$ (mod n).

Une telle preuve est par exemple constituée en choisissant aléatoirement deux nombres entiers $r_1$ et $r_2$ dans l'ensemble des nombres binaires signés à $\varepsilon(2 1_p + k)$ bits, noté $\pm\{0, 1\}^{\varepsilon(2 1 p + k)}$, et en calculant les nombres suivants :

$$d_1 = g^{r_1} h^{r_2} (mod\, n), \qquad\qquad (6)$$

$$c = H(g\|h\|C_1\|d_1), \qquad\qquad (7)$$

dans laquelle le symbole $\|$ représente l'opérateur de concaténation,

$$s_1 = r_1 - c\alpha, \qquad\qquad (8)$$

$$s_2 = r_2 - c\beta. \qquad\qquad (9)$$

$s_1$ et $s_2$ étant des nombres entiers relatifs.

La preuve U est alors égale à (c, $s_1$, $s_2$, Cl).

Le nombre $C_1$ et la preuve U sont ensuite envoyés à l'autorité de confiance qui vérifie à l'étape 21' la preuve U et que $C_1$ se trouve dans l'ensemble QR(n) des résidus quadratiques de n.

Dans l'exemple précédent, la vérification de la preuve U consiste à calculer :

$$t_1 = C_1^c g^{s_1} h^{s_2} (\mathrm{mod}\, n), \qquad (10)$$

et

$$c' = H(g\|h\|C_1\|t_1). \qquad (11)$$

La preuve est vérifiée si c' = c et si $s_1$ et $s_2$ appartiennent à l'ensemble $\pm\{0, 1\}^{\varepsilon(21 p+k)+1}$.

Si tel est le cas, le calculateur 1 de l'autorité de confiance génère aléatoirement 22' deux nombres entiers $\alpha_i$, $\beta_i$ dans l'intervalle ]0, $2^{\lambda_2}$[, et envoie ces nombres au terminal 2 de l'utilisateur. Dans la procédure 20, le terminal de l'utilisateur calcule alors à l'étape 24 les nombres entiers $x_i$ et $C_2$ en appliquant les formules suivantes :

$$x_i = 2^{\lambda_1} + (\alpha_i \tilde{x}_i + \beta_i (\mathrm{mod}\, 2^{\lambda_2})), \qquad (12)$$

et

$$C_2 = a^{x_i} (\mathrm{mod}\, n). \qquad (13)$$

Puis, il construit à l'étape 25 les preuves suivantes (par exemple selon le même principe que la preuve U) :

- la preuve V de connaître un nombre $\alpha$ appartenant à l'ensemble A tel que :

$$C_2 = a^\alpha (\mathrm{mod}\, n) \qquad (14)$$

- la preuve W de connaître trois nombres $\beta$, $\gamma$, $\delta$ tels que $\beta \in ]- 2^{\lambda}2, 2^{\lambda}2[$ et

$$C_2 / a^{\lambda 2} = a^\beta \qquad (15)$$

et

$$C_1^{\alpha_i} g^{\beta_i} = g^\beta (g^{2^{\lambda_2}})^\gamma h^\delta \qquad (16)$$

$C_2$ et les preuves V et W sont ensuite envoyés au calculateur 1 de l'autorité de confiance qui vérifie 23' les preuves V et W, et que $C_2$ appartient à l'ensemble QR(n). Si tel est le cas, il génère 24' aléatoirement un nombre premier $e_i$ appartenant à l'ensemble $\Gamma$ et applique la formule suivante :

$$A_i = (C_2 a_0)^{1/e_i} (\mathrm{mod}\, n) \qquad (17)$$

et renvoie à l'utilisateur les entiers $A_i$ et $e_i$ considérés comme un certificat $[A_i, e_i]$ d'appartenance de l'utilisateur à la liste. Le calculateur 1 crée 26' alors une nouvelle entrée dans une table des membres de la liste, par exemple dans la base de données 4, dans laquelle il mémorise le certificat $[A_i, e_i]$ en vue de modifications de la liste (par exemple révocations de membres), et de préférence les messages échangés entre l'autorité de confiance et l'utilisateur durant cette procédure d'enregistrement de l'utilisateur.

Par ailleurs, l'utilisateur peut contrôler 26 l'authenticité du certificat reçu en vérifiant que l'équation suivante est satisfaite :

$$a^{x_i} a_0 = A_i^{e_i} (\mathrm{mod}\, n) \qquad (18)$$

A la fin de cette procédure d'enregistrement 20, l'utilisateur dispose donc d'une clé privée $x_i$ et d'un certificat $[A_i, e_i]$ de membre de la liste, qui sont par exemple mémorisés dans une carte à puce 7.

A l'aide d'un tel certificat, l'utilisateur peut générer une signature d'un message M appartenant à l'ensemble $\{0, 1\}^*$.

A cet effet, l'autorité de confiance publie selon l'invention un numéro m de séquence, choisi aléatoirement dans l'ensemble QR(n). Ce numéro devra être utilisé par les membres de la liste pour signer un message durant une séquence donnée. Les numéros respectifs de séquences différentes ne doivent pas pouvoir être liés. En particulier, il doit être impossible de calculer un logarithme discret d'un numéro de séquence donné, par rapport à la base d'un autre numéro de séquence, c'est-à-dire qu'il ne doit pas être possible en pratique de calculer des nombres entiers x et y tels que : $m^x = m'^y$ (mod n), m et m' étant des numéros de séquence.

Ce numéro m de séquence peut être calculé en fonction de la date de début de la séquence : m = F(date). Cette fonction F est par exemple choisie égale à :

$$F(d) = (H'(d))^2 \,(\mathrm{mod}\ n) \qquad (19)$$

dans laquelle $H'$ une fonction de hachage résistante aux collisions, telle qu'une séquence binaire de longueur quelconque notée $\{0, 1\}^*$ est transformée en une séquence binaire de longueur $21_p$ notée $\{0, 1\}^{21}p$. Il est donc facile de vérifier la validité du numéro de séquence en appliquant la formule (19).

La procédure de signature d'un message est conçue pour permettre notamment à un utilisateur de démontrer qu'il connaît un certificat de membre et une clé privée de membre et qu'il utilise le bon numéro de séquence.

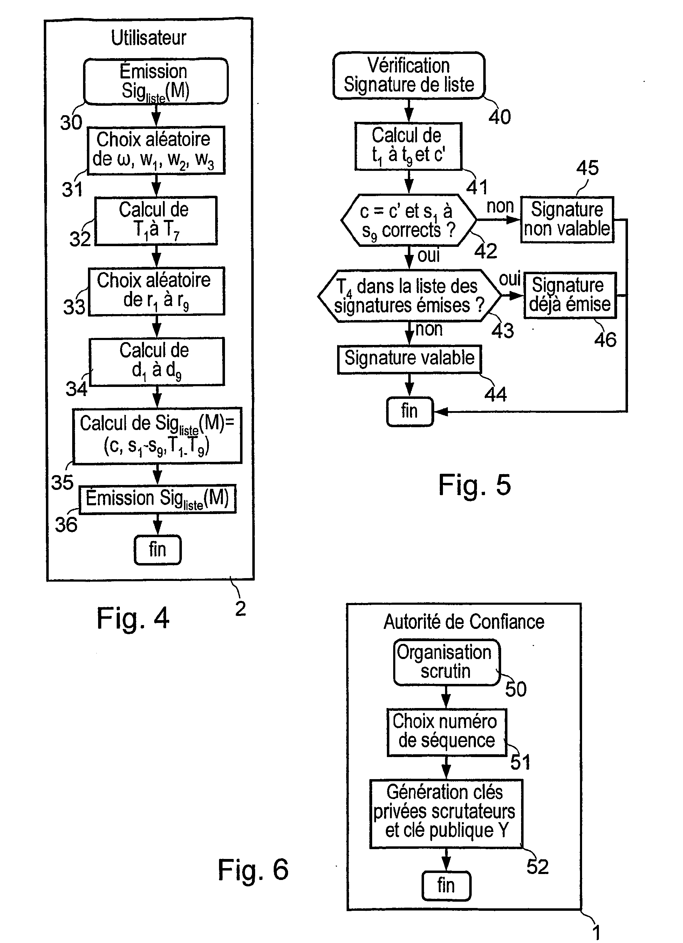

Pour signer un message M, un membre de la liste doit exécuter, par exemple sur sa carte à puce 7 connectée à un terminal 2 et mémorisant son certificat $[A_i, e_i]$ et sa clé privée $x_i$, une procédure 30 de signature, illustrée sur la figure 4. Cette procédure comprend tout d'abord une étape 31 de génération aléatoire d'un nombre $\omega$ appartenant à l'ensemble $\{0, 1\}^{21}p$.

Elle comprend en outre une étape 32 consistant à calculer les nombres suivants à partir de $\omega$ :

$$T_1 = A_i b^{\omega} \,(\mathrm{mod}\ n), \qquad (20)$$

$$T_2 = g^{\omega} \,(\mathrm{mod}\ n), \qquad (21)$$

$$T_3 = g^{e_i} h^{\omega} \,(\mathrm{mod}\ n). \qquad (22)$$

Conformément à l'invention, on calcule également le nombre suivant :

$$T_4 = m^{x_i} (\mathrm{mod}\ n) \qquad (23)$$

A l'étape 33 suivante, on génère d'une manière aléatoire les nombres $r_1$ dans l'ensemble des nombres binaires signés à $\varepsilon(\gamma_2 + k)$ bits, noté $\pm\{0, 1\}^{\varepsilon(\gamma 2 + k)}$, $r_2$ dans l'ensemble $\pm\{0, 1\}^{\varepsilon(\lambda 2 + k)}$, $r_3$ dans l'ensemble $\pm\{0, 1\}^{\varepsilon(\gamma 1 + 21p + k + 1)}$ et $r_4$ dans l'ensemble $\pm\{0, 1\}^{\varepsilon(21p + k)}$. Puis, à l'étape 34, on calcule les grandeurs suivantes :

$$d_1 = T_1^{r_1}/(a^{r_2}y^{r_3}) \ (\mathrm{mod}\ n) \tag{24}$$

$$d_2 = T_2^{r_1}/g^{r_3} \ (\mathrm{mod}\ n) \tag{25}$$

$$d_3 = g^{r_4} \ (\mathrm{mod}\ n) \tag{26}$$

$$d_4 = g^{r_1}h^{r_4} \ (\mathrm{mod}\ n) \tag{27}$$

Conformément à l'invention, on calcule également le nombre suivant :

$$d_5 = m^{r_2} \ (\mathrm{mod}\ n) \tag{28}$$

Puis, à l'étape 35, on calcule les nombres suivants :

$$c = H(m\|b\|g\|h\|a_0\|a\|T_1\|T_2\|T_3\|T_4\|d_1\|d_2\|d_3\|d_4\|d_5\|M), \tag{29}$$

dans laquelle $\|$ représente l'opération de concaténation,

$$s_1 = r_1 - c(e_i - 2^{\gamma_1}), \tag{30}$$

$$s_2 = r_2 - c(x_i - 2^{\lambda_1}), \tag{31}$$

$$s_3 = r_3 - ce_i\omega, \tag{32}$$

$$s_4 = r_2 - c\omega, \tag{33}$$

$s_1$, $s_2$, $s_3$, $s_4$ étant des nombres entiers relatifs.
La signature est enfin constituée de l'ensemble de nombres suivants :

$$(c, s_1, s_2, s_3, s_4, T_1, T_2, T_3, T_4). \tag{34}$$

qui est par exemple émise par le réseau 5.
La vérification d'une signature d'un message M se déroule en exécutant la procédure 40 illustrée sur la figure 5. Cette procédure comprend tout d'abord à l'étape 41, le calcul des nombres suivants :

$$t_1 = a_0^c T_1^{s_1 - c2^{\gamma_1}}/(a^{s_2 - c2^{\lambda_1}} b^{s_3})(\mathrm{mod}\ n) \tag{35}$$

$$t_2 = T_2^{s_1 - c2^{\gamma_1}}/g^{s_3}(\mathrm{mod}\ n) \tag{36}$$

$$t_3 = T_2^c \, g^{s_4} (\mathrm{mod}\, n) \qquad\qquad (37)$$

$$t_4 = T_3^c \, g^{s_1 - c2^{\gamma_1}} \, h^{s_4} (\mathrm{mod}\, n) \qquad\qquad (38)$$

Selon l'invention, elle comprend également le calcul des nombres suivants :

$$t_5 = T_4^c \, m^{s_2 - c2^{\lambda_1}} (\mathrm{mod}\, n) \qquad\qquad (39)$$

$$c' = H(m\|b\|g\|h\|a_0\|a\|T_1\|T_2\|T_3\|T_4\|t_1\|t_2\|t_3\|t_4\|t_5\|M) \qquad\qquad (40)$$

La signature est authentique si les conditions suivantes sont vérifiées à l'étape 42 :

$$c' = c \qquad\qquad (41)$$

$$s_1 \in \pm\{0,1\}^{\varepsilon(\gamma_2 + k) + 1}, \qquad\qquad (42)$$

$$s_2 \in \pm\{0,1\}^{\varepsilon(\lambda_2 + k) + 1}, \qquad\qquad (43)$$

$$s_3 \in \pm\{0,1\}^{\varepsilon(\gamma_1 + 2l_p + k + 1) + 1}, \qquad\qquad (44)$$

$$s_4 \in \pm\{0,1\}^{\varepsilon(2l_p + k) + 1}. \qquad\qquad (45)$$

Si ces conditions ne sont pas vérifiées, la signature n'est pas valable (étape 45).

En outre, en accédant à toutes les signatures qui ont été produites pendant une séquence donnée, par exemple dans la base de données 4, on peut vérifier facilement à l'étape 43, à l'aide du paramètre $T_4$, si un membre de la liste a signé plusieurs fois : toutes les signatures émises par un membre de la liste comprennent un paramètre $T_4$ ayant la même valeur pour un numéro de séquence donné.

Il est en outre à noter qu'un membre ne peut pas tricher en utilisant une autre valeur car $T_4$ est fortement lié à $T_1$. En effet, la formule de calcul de $T_1$ peut aussi être écrite de la manière suivante :

$$T_1^{e_i} = a_0 \, a^{x_i} \, b^{\omega e_i} (\mathrm{mod}\, n) \qquad\qquad (46)$$

Si $T_4$ se trouve déjà dans l'ensemble des signatures émises pour un numéro de séquence donné, on en déduit que la signature a déjà été émise par un membre de la liste pour ce numéro de séquence (étape 46).

Pour inclure une possibilité de révocation d'un membre de la liste, le procédé qui vient d'être décrit peut être modifié de la manière suivante.

La procédure d'organisation 10 de la liste comprend en outre à l'étape 14, le choix aléatoire d'un nombre u appartenant à l'ensemble QR(n), et la définition de deux ensembles $E_{add}$ et $E_{del}$ qui sont initialement vides.

La clé publique PK de l'autorité de confiance est alors constituée de la séquence de nombres entiers (n, a, $a_0$,

b, g, h, u) et des ensembles $E_{add}$ et $E_{del}$.

Durant la procédure d'enregistrement 20, 20', le calculateur 1 de l'autorité de confiance attribue à l'étape 25' le paramètre $u_i$ au nouveau membre $U_i$ de la liste, ce paramètre étant tel que $u_i = u$, et met à jour la valeur du paramètre u en remplaçant cette valeur par $u^{ei}$.

Le certificat du nouveau membre regroupe alors les entiers $A_i$, $e_i$ et $u_i$, ce certificat étant mémorisé à l'étape 26' pour des modifications futures et transmis au nouveau membre.

L'autorité de confiance introduit également le nombre $e_i$ attribué au nouveau membre dans l'ensemble $E_{add}$.

A la réception de son certificat, le nouveau membre vérifie en outre que :

$$u_i^{e_i} = u \ (mod \ n) \tag{47}$$

Les autres membres $U_j$ de la liste doivent alors exécuter une procédure de mise à jour pour prendre en compte l'arrivée du nouveau membre et donc la modification du paramètre de liste u. Cette procédure consiste à recalculer leur paramètre $u_j$ de la manière suivante :

$$u_j = u_j^{e_i} \ (mod \ n) \tag{48}$$

De cette manière, la relation (47) est toujours vérifiée pour tous les couples $(u_j, e_j)$ de tous les membres de la liste.

La procédure de révocation d'un membre $U_k$ de la liste dont le certificat est $(A_k, e_k, u_k)$ consiste pour l'autorité de confiance à modifier le paramètre u de la manière suivante :

$$u = u^{1/e_k} \ (mod \ n) \tag{49}$$

et à introduire le paramètre $e_k$ dans l'ensemble $E_{del}$.

En outre, chaque membre non révoqué $U_j$ de la liste doit prendre en compte cette révocation (changement du paramètre u) en recalculant son paramètre $u_j$ de la manière suivante :

$$u_j = u_j^b u^a \ (mod \ n) \tag{50}$$

a et b étant tels que $ae_j + be_k = 1$

Pour déterminer a et b, il suffit d'appliquer l'algorithme d'Euclide étendu consistant à effectuer une série de divisions euclidiennes.

Il est à noter que le membre révoqué (possédant $e_k$) ne peut pas déterminer a et b à l'aide de la formule (50) qui devient $e_k(a + b) = 1$, et donc recalculer le paramètre $u_k$.

Durant la procédure 30 de signature par un membre de la liste, il faut en outre à l'étape 31 choisir aléatoirement des nombres $w_1$, $w_2$ et $w_3$ de longueur binaire égale à $21_p$, c'est-à-dire appartenant à l'ensemble $\{0, 1\}^{21}p$, et calculer à l'étape 32 les nombres suivants :

$$T_5 = g^{e_i} h^{w_1} (mod \ n) \tag{51}$$

$$T_6 = u_i h^{w_2} (mod \ n) \tag{52}$$

$$T_7 = g^{w_2} h^{w_3} (mod \ n) \tag{53}$$

Il faut aussi à l'étape 33 choisir aléatoirement des nombres $r_5$, $r_6$, $r_7$ appartenant à l'ensemble $\pm\{0, 1\}^{\varepsilon(21p+k)}$ et des nombres $r_8$ et $r_9$ appartenant à l'ensemble $\pm\{0, 1\}^{\varepsilon(\gamma 1+21p+k+1)}$, puis calculer à l'étape 34 les nombres suivants :

$$d_6 = g^{r1}h^{r5} \pmod n \tag{54}$$

$$d_7 = g^{r6}h^{r7} \pmod n \tag{55}$$

$$d_6 = T_6^{r1}/h^{r8} \pmod n \tag{56}$$

$$d_9 = T_7^{r1}/(g^{r8}h^{r9}) \pmod n \tag{57}$$

Le nombre c inclut alors les éléments suivants :

$$c = H(m\|b\|g\|h\|a_0\|a\|T_1\|T_2\|T_3\|T_4\|T_5\|T_6\|T_7\|d_1\|d_2\|d_3\|d_4\|d_5\|d_6\|d_7\|d_8\|d_9\|M) \tag{58}$$

Il faut encore calculer à l'étape 35 :

$$s_5 = r_5 - cw_1 \tag{59}$$

$$s_6 = r_6 - cw_2 \tag{60}$$

$$s_7 = r_7 - cw_3 \tag{61}$$

$$s_8 = r_8 - ce_iw_2 \tag{62}$$

$$s_9 = r_9 - ce_iw_3 \tag{63}$$

La signature est alors constituée de l'ensemble de nombres suivants :

$$(c, s_1, s_2, s_3, s_4, s_5, s_6, s_7, s_8, s_9, T_1, T_2, T_3, T_4, T_5, T_6, T_7). \tag{64}$$

La procédure 40 de vérification d'une signature comprend alors en outre le calcul des nombres suivants à l'étape 41 :

$$t_6 = T_5^c g^{s_1 - c2^{\gamma 1}} h^{s_5} \pmod n \tag{65}$$

$$t_7 = T_7^c g^{s_6} h^{s_7} \pmod n \tag{66}$$

$$t_8 = u^c \, T_6^c \, g^{s_1 - c2^{\gamma 1}} / h^{s_8} (\mathrm{mod}\,n) \qquad (67)$$

$$t_9 = T_7^{s_1 - c2^{\gamma 1}} / (g^{s_8} h^{s_9})(\mathrm{mod}\,n) \qquad (68)$$

$$c' = H(m\|b\|g\|h\|a_0\|a\|T_1\|T_2\|T_3\|T_4\|T_5\|T_6\|T_7\|t_1\|t_2\|t_3\|t_4\|t_5\|t_6\|t_7\|t_8\|t_9\|M) \qquad (69)$$

La signature est authentique si les conditions supplémentaires suivantes sont vérifiées à l'étape 42 :

$$s_5 \in \pm\{0,\,1\}^{\varepsilon(2l_p + k) + 1}, \qquad (70)$$

$$s_6 \in \pm\{0,\,1\}^{\varepsilon(2l_p + k) + 1}, \qquad (71)$$

$$s_7 \in \pm\{0,\,1\}^{\varepsilon(2l_p + k) + 1}, \qquad (72)$$

$$s_8 \in \pm\{0,\,1\}^{\varepsilon(\gamma 1 + 2l_p + k + 1) + 1} \qquad (73)$$

et

$$s_9 \in \pm\{0,\,1\}^{\varepsilon(\gamma 1 + 2l_p + k + 1) + 1}. \qquad (74)$$

Il est à noter que contrairement à la signature de groupe décrite dans le document [1], il n'est pas possible pour l'autorité de confiance de retrouver l'identité d'un signataire, c'est-à-dire le nombre $A_i$ du certificat du signataire à partir d'une signature de liste telle que décrite. En effet, contrairement au procédé décrit dans ce document, l'autorité de confiance n'utilise pas une clé privée x pour générer le paramètre b, et donc le nombre Ai ne peut pas être déduit de $T_1$ et $T_2$.

En outre, la signature générée par un membre révoqué $U_k$ sera détectée invalide. En effet, le paramètre $T_6$ fait intervenir le paramètre $u_k$ qui a été déterminé à partir du paramètre commun u, et le paramètre $t_8$ qui est calculé pour vérifier la signature fait intervenir également le paramètre u qui a été modifié à la suite de la révocation du membre k. Il en résulte que, lors de la vérification de signature, les paramètres $T_6$ et $t_8$ sont incohérents, et donc que l'égalité entre c et c' ne peut pas être vérifiée par la signature du membre k.

Le procédé de signature de liste qui vient d'être décrit peut être appliqué à un procédé de vote électronique. Le procédé de vote électronique selon l'invention comprend plusieurs phases dont l'exécution des procédures du procédé de signature de liste décrit ci-avant.

Ce procédé implique l'intervention d'une autorité de confiance 1 organisatrice des élections qui exécute à cet effet une procédure 50 d'organisation du scrutin. Cette procédure consiste à générer les données nécessaires au bon déroulement des élections, une base de données publique accessible à tous dans laquelle sont recueillis les bulletins de vote. Au cours de l'organisation du scrutin, on désigne également des scrutateurs qui vont dépouiller les votes et déterminer le résultat de l'élection.

L'autorité organisatrice procède tout d'abord à la génération des différents paramètres nécessaires à la mise en place d'une signature de liste, en exécutant la procédure 10 d'organisation d'une signature de liste. Les électeurs doivent ensuite préalablement s'inscrire, par exemple dans une mairie, sur une liste électorale de manière à recevoir toutes les données nécessaires, à savoir une clé privée $x_i$ et un certificat $(A_i, e_i, u_i)$, pour générer une signature de liste. A l'aide de ces paramètres, les électeurs peuvent participer à toutes les élections futures. Cette procédure d'inscription peut par exemple être exécutée entre une carte à puce 7 et un terminal 2, la carte à puce mémorisant à la fin de la procédure le certificat de l'électeur.

Avant une élection, l'autorité organisatrice procède à la mise à jour des listes électorales en exécutant la procédure 20, 20' pour les électeurs nouvellement inscrits, et en enlevant (révoquant) les droits de signature de liste à toutes les personnes rayées des registres électoraux (par exemple les personnes ayant quitté la circonscription ou déchues de leurs droits civiques). Ces révocations sont réalisées en exécutant la procédure de révocation décrite ci-avant. A l'étape 51 de la procédure 50, l'autorité organisatrice publie également un numéro de séquence m nécessaire à la mise en place d'une nouvelle séquence de signature de liste, de manière à empêcher les électeurs de voter (signer) deux fois à cette élection.

Par ailleurs, les scrutateurs vont créer 52 les paires de clés publiques/privées nécessaires, de telle sorte qu'ils doivent tous coopérer pour pouvoir déchiffrer un message chiffré avec la clé publique. A cet effet, le système cryptographique mis en place est choisi de manière à permettre à un électeur de chiffrer un message (bulletin de vote) à l'aide d'au moins une clé publique, tout en imposant la coopération de tous les scrutateurs pour utiliser la ou les clés privées correspondantes, et ainsi déchiffrer le message.

Le partage de la clé privée de déchiffrement entre tous les scrutateurs peut être effectué de la manière suivante.

On considère g un générateur du groupe cyclique G. Une clé privée $x_i$ respective est attribuée à chaque scrutateur i qui calcule le nombre $y_i$ appartenant à G tel que :

$$y_i = g^{x_i} \qquad (75)$$

La clé publique Y à utiliser par les électeurs est obtenue par la formule suivante :

$$Y = \prod_i y_i \qquad (76)$$

et la clé privée X correspondante partagée par tous les scrutateurs i est la suivante :

$$X = \sum_i x_i \qquad (77)$$

On peut arriver à un résultat analogue en procédant à un chiffrement en utilisant toutes les clés publiques respectives des scrutateurs. Le déchiffrement nécessitant la connaissance de toutes les clés privées correspondantes.

Avant d'aller voter, chaque électeur doit mettre à jour son certificat de signature de liste conformément à la procédure de modification décrite ci-avant, à l'aide des paramètres publiés précédemment. Si l'électeur n'est pas radié des listes électorales, cette modification peut être effectuée.

Pendant l'ouverture des bureaux de vote, chaque électeur émet un bulletin de vote en exécutant sur un terminal une procédure 60. A l'étape 61, l'électeur sélectionne son vote $v_j$ et chiffre celui-ci à l'aide de la clé publique des scrutateurs pour obtenir un vote chiffré $D_j$. Puis il signe le vote chiffré à l'aide du procédé de signature de liste pour obtenir une signature $S_j$. Le bulletin de vote constitué de l'ensemble $(D_j, S_j)$ du vote et de la signature, est ensuite publié de manière anonyme dans une base de données publique 4.

A l'étape 62, le chiffrement du vote est réalisé en utilisant un algorithme de chiffrement probabiliste (c'est-à-dire que la probabilité que deux chiffrements d'un même message soient identiques est quasiment nulle), tel que par exemple l'algorithme de El Gamal ou de Paillier. Si on applique l'algorithme de El Gamal, le chiffrement est effectué en calculant les nombres suivants :

$$a_j = v_j Y^r \text{ et } b_j = g^r \qquad (78)$$

dans lesquels r est un élément aléatoire. Le vote $v_j$ chiffré est alors constitué par le couple $D_j = (a_j, b_j)$. L'électeur $E_j$ calcule 63 ensuite la signature de liste du vote chiffré $S_j = \text{Sig}_{\text{liste}}(a_j \| b_j)$, $\text{Sig}_{\text{liste}}$ étant la signature de liste telle que décrite ci-avant, en exécutant la procédure 30 par sa carte à puce 7, laquelle est transmise au terminal 2.

L'électeur $E_j$ a ainsi généré son bulletin de vote $(D_j, S_j)$ qu'il envoie 64 à la base de données publique 4 au moyen d'un canal de transmission anonyme, c'est-à-dire interdisant de relier un message transmis à l'émetteur de celui-ci. L'électeur peut à cet effet utiliser un terminal public ou un réseau de mélangeurs.

A la fin du scrutin, les scrutateurs effectuent le dépouillement du scrutin en exécutant la procédure 70 sur le terminal 3. Cette procédure consiste tout d'abord à générer 71 la clé privée de déchiffrement X à partir de leurs clés privées respectives $X_i$ et à l'aide de la formule (77). Puis, à l'étape 72, ils accèdent à la base de données publique 4 des bulletins de vote pour obtenir les bulletins de vote ($D_i$, $S_i$) et pour les déchiffrer.

Le déchiffrement proprement dit des bulletins de vote consiste pour chaque bulletin de vote émis (étape 73) à vérifier 74 la signature $S_i$ en exécutant la procédure 40 de vérification de signature de liste décrite ci-avant, et si la signature est valable et unique (étape 75), à déchiffrer 76 le vote chiffré $D_j$ en appliquant la formule suivante :

$$v_j = a_j/b_j^X \qquad\qquad\qquad (79)$$

Les votes $v_j$ ainsi déchiffrés et vérifiés, avec le résultat de la vérification correspondante sont introduits 77 dans la base de données 4 des bulletins de vote, en association avec le bulletin de vote ($D_j$, $S_j$).

La clé privée de déchiffrement X est également publiée pour permettre à tous de vérifier le dépouillement des bulletins de vote.

Une fois que tous les bulletins de vote ont été dépouillés, cette procédure 70 calcule à l'étape 78 le résultat de l'élection et met à jour la base de données publique des bulletins de vote en y inscrivant ce résultat, et éventuellement la clé privée de déchiffrement X.

Il est aisé de constater que les propriétés énoncées ci-avant, nécessaires à la mise en place d'un système de vote électronique, sont vérifiées par le procédé décrit ci-dessus. En effet, chaque électeur ne peut voter qu'une seule fois puisqu'il est facile de retrouver dans la base de données deux signatures émises par un même électeur pour un même scrutin (pour un même numéro de séquence). Dans ce cas, les scrutateurs peuvent ne pas prendre en compte les deux votes ou ne comptabiliser qu'un seul vote s'ils sont identiques. Alternativement, on peut prévoir qu'à l'étape 64 d'insertion d'un vote dans la base de données 4, on vérifie que le vote émis par l'électeur ne figure pas déjà dans la base de données en y recherchant le paramètre $T_4$ propre à l'électeur. Si on détecte ainsi que l'électeur a déjà voté pour ce scrutin, le nouveau vote n'est pas inséré dans la base de données 4.

Ensuite, il n'est pas possible de commencer à dépouiller les bulletins de vote avant la fin du scrutin si au moins un des scrutateurs respecte la règle, puisqu'il faut la présence de tous les scrutateurs pour dépouiller un bulletin de vote. Enfin, le résultat de l'élection est vérifiable par tous puisque les scrutateurs fournissent dans la base de données tous les éléments nécessaires (en particulier la clé privée de dépouillement) pour procéder à une telle vérification, et que la vérification d'une signature est accessible à tous en utilisant la clé publique PK=(n, a, $a_0$, b, g, h, u) de l'autorité de confiance. Ainsi n'importe qui peut effectuer le dépouillement de la même manière que les scrutateurs et donc s'assurer qu'il a été effectué de manière correcte.

Les clés des scrutateurs sont bien entendu obsolètes à la fin du scrutin, puisqu'elles sont publiées.

**Revendications**

1. Procédé de signature de liste comprenant au moins :

    - une phase d'organisation (10) consistant pour une autorité de confiance (1) à définir des paramètres de mise en oeuvre d'une signature électronique anonyme, dont une clé privée et une clé publique correspondante,
    - une phase d'enregistrement (20, 20') de personnes dans une liste de membres autorisés à générer une signature électronique propre aux membres de la liste, au cours de laquelle chaque personne (2) à enregistrer calcule (24) une clé privée ($x_i$) à l'aide de paramètres fournis par l'autorité de confiance et de paramètres choisis aléatoirement par la personne à enregistrer, et l'autorité de confiance délivre (25') à chaque personne à enregistrer un certificat ([$A_i$, $e_i$]) de membre de la liste,
    - une phase de signature (30) au cours de laquelle un membre de la liste génère (35) et émet (36) une signature propre aux membres de la liste, cette signature étant construite de manière à contenir une preuve que le membre de la liste ayant émis la signature, connaît un certificat ([$A_i$, $e_i$]) de membre de la liste, et
    - une phase de vérification (40) de la signature émise comprenant des étapes (41, 42) d'application d'un algorithme prédéfini pour mettre en évidence la preuve que la signature a été émise par une personne en possession d'un certificat de membre de la liste,
    **caractérisé en ce qu'**il comprend en outre :
    - une phase de définition d'une séquence consistant pour l'autorité de confiance (1) à générer un numéro de séquence m à utiliser dans la phase de signature (30), une signature (Sig$_{liste}$) générée durant la phase de signature comprenant un élément de signature ($T_4$) qui est commun à toutes les signatures émises par un même membre de la liste avec un même numéro de séquence et qui contient une preuve que le numéro de séquence m à été utilisé pour générer la signature, la phase de vérification (40) comprenant en outre une étape de vérification (43) de la preuve que le numéro de séquence m à été utilisé pour générer la signature ;

- une phase de révocation d'un membre de la liste pour retirer un membre de la liste, au cours de laquelle l'autorité de confiance (1) retire de la liste le membre à retirer et met à jour les paramètres de mise en oeuvre de la signature électronique anonyme, pour tenir compte du retrait du membre de la liste ; et

- une phase de mise à jour des certificats ($[A_i, e_i]$) des membres de la liste pour tenir compte de modifications de la composition de la liste.

2. Procédé selon la revendication 1,
**caractérisé en ce que** la phase d'organisation (10) comprend la définition d'un paramètre commun (u) dépendant de la composition de la liste, la phase d'enregistrement (20, 20') d'une personne dans la liste comprenant la définition d'un paramètre ($u_i$) propre à la personne à enregistrer qui est calculé en fonction du paramètre (u ) dépendant de la composition de la liste et qui est intégré au certificat ($[A_i, e_i, u_i]$) remis à la personne, la phase d'enregistrement (20, 20') comprenant une étape de mise à jour du paramètre commun (u) dépendant de la composition de la liste, la phase de révocation d'un membre de la liste comprenant une étape de modification du paramètre commun (u) dépendant de la composition de la liste, pour tenir compte du retrait du membre de la liste, et la phase de mise à jour des certificats des membres de la liste comportant une étape de mise à jour du paramètre ($u_i$) propre à chaque membre de la liste pour tenir compte des modifications de la composition de la liste.

3. Procédé selon la revendication 1 ou 2,
**caractérisé en ce qu'**une signature propre à un membre de la liste et possédant le certificat $[A_i, e_i]$ comprend des paramètres $T_1$, $T_2$, $T_3$ tels que :

$$T_1 = A_i b^\omega \ (mod\ n),$$

$$T_2 = g^\omega \ (mod\ n),$$

$$T_3 = g^{e_i} h^\omega \ (mod\ n),$$

$\omega$ étant un nombre choisi aléatoirement lors de la phase de signature (30), et b, g, h et n étant des paramètres généraux de mise en oeuvre de la signature de groupe, tels que les paramètres b, g et h ne peuvent pas se déduire les uns des autres par des fonctions d'élévation de puissance entière modulo n, de sorte que le nombre $A_i$, et donc l'identité du membre de la liste possédant le certificat $[A_i, e_i]$ ne peut pas se déduire d'une signature émise par le membre.

4. Procédé selon l'une des revendications 1 à 3,
**caractérisé en ce que** le numéro m d'une séquence utilisé pour générer une signature de liste est calculé en fonction d'une date de début de séquence.

5. Procédé selon la revendication 4,
**caractérisé en ce que** la fonction de calcul du numéro d'une séquence est de la forme :

$$F(d) = (H(d))^2 \ (mod\ n)$$

dans laquelle *H* est une fonction de hachage résistante aux collisions, d est la date de début de la séquence, et n est un paramètre général de mise en oeuvre de la signature de groupe.

6. Procédé selon l'une des revendications 1 à 5,
**caractérisé en ce qu'**une signature ($Sig_{liste}$) émise par un membre de la liste contient un paramètre ($T_4$) qui est calculé en fonction du numéro de séquence et de la clé privée ($x_i$) du membre signataire.

**7.** Procédé selon la revendication 6,
**caractérisé en ce que** le paramètre $T_4$ d'une signature émise par un membre de la liste et dépendant du numéro de séquence m et de la clé privée $x_i$ du membre signataire est obtenu par la formule suivante :

$$T_4 = m^{x_i} \pmod{n}$$

n étant un paramètre général de mise en oeuvre de la signature de groupe, et **en ce que** la signature comprend la preuve que le paramètre $T_4$ a été calculé avec la clé privée $x_i$ du membre de la liste qui a émis la signature.

**8.** Procédé de vote électronique comprenant une phase d'organisation (50) des élections, au cours de laquelle une autorité organisatrice procède à la génération de paramètres nécessaires à un scrutin, et attribue à des scrutateurs des clés leur permettant de déchiffrer et vérifier des bulletins de vote, une phase d'attribution d'un droit de signature à chacun des électeurs, une phase de vote (60) au cours de laquelle les électeurs signent un bulletin de vote, et une phase de dépouillement (70) au cours de laquelle les scrutateurs vérifient les bulletins de vote, et calculent le résultat du scrutin en fonction du contenu des bulletins de vote déchiffrés et valides,
**caractérisé en ce qu'**il met en oeuvre un procédé de signature de liste selon l'une des revendications 1 à 7, pour signer les bulletins de vote, chaque électeur étant enregistré comme membre d'une liste, et un numéro de séquence m étant généré pour le scrutin, pour détecter si un même électeur a émis ou non plusieurs bulletins de vote pour le scrutin.

**9.** Procédé selon la revendication 8,
**caractérisé en ce que** la phase d'organisation (50) comprend la remise à chaque scrutateur d'une clé publique et d'une clé privée, **en ce que** les bulletins de vote ($v_i$) sont chiffrés (62) à l'aide d'une clé publique (Y) obtenue par le produit des clés publiques ($y_i$) respectives de tous les scrutateurs, et **en ce que** la clé privée (X) de déchiffrement correspondante est obtenue en calculant la somme de clés privées ($x_i$) respectives de tous les scrutateurs.

**10.** Procédé selon la revendication 9,
**caractérisé en ce que** le chiffrement (62) des bulletins de vote est effectué à l'aide d'un algorithme de chiffrement probabiliste.

**11.** Procédé selon l'une des revendications 8 à 10,
**caractérisé en ce que** les bulletins de vote émis par les électeurs sont stockés dans une base de données publique (4), **en ce que** le résultat de la vérification et du dépouillement de chaque bulletin de vote est stocké dans la base de données en association avec le bulletin de vote, et **en ce que** la clé privée (X) de déchiffrement des bulletins de vote est publiée.

**12.** Calculateur pour la mise en oeuvre d'une signature de liste, comprenant des moyens pour :

- générer des paramètres de mise en oeuvre d'une signature électronique anonyme propre aux membres d'une liste, les paramètres comportant une clé privée et une clé publique correspondante ; et
- transmettre à chaque personne (2) à enregistrer dans la liste, des paramètres à utiliser par la personne à enregistrer pour calculer (24) une clé privée ($x_i$), et un certificat ($[A_i, e_i]$) de membre de la liste,
**caractérisé en ce qu'**il comprend en outre des moyens pour :
- générer un numéro de séquence m à utiliser par les membres de la liste pour émettre une signature anonyme propre aux membres de la liste, une signature anonyme ($Sig_{liste}$) émise par un membre de la liste comprenant un élément de signature ($T_4$) qui est commun à toutes les signatures émises par le même membre de la liste avec un même numéro de séquence, et qui contient une preuve que le numéro de séquence m a été utilisé pour générer la signature ;
- retirer de la liste un membre à révoquer de la liste, et mettre à jour les paramètres de mise en oeuvre de la signature électronique anonyme propre aux membres de la liste, pour tenir compte du retrait du membre de la liste ; et
- mettre à jour les certificats ($[A_i, e_i]$) des membres de la liste à chaque modification de la composition de la liste.

**13.** Calculateur pour la mise en oeuvre d'un procédé de vote électronique, comprenant des moyens pour :

- générer au cours d'une phase d'organisation d'un scrutin des paramètres de mise en oeuvre d'une signature électronique anonyme propre aux membres d'une liste d'électeurs, les paramètres comportant une clé privée et une clé publique correspondante ;

- attribuer à des scrutateurs des clés leur permettant de déchiffrer et vérifier des bulletins de vote émis pour le scrutin ; et

- transmettre à chaque membre (2) de la liste d'électeurs du scrutin des paramètres à utiliser par l'électeur pour calculer (24) une clé privée ($x_i$), et un certificat ($[A_i, e_i]$) de membre de la liste d'électeurs du scrutin, **caractérisé en ce qu'**il comprend en outre des moyens pour :

- générer un numéro de séquence m propre au scrutin à utiliser par les membres de la liste d'électeurs pour signer un bulletin de vote, une signature ($Sig_{liste}$) d'un bulletin de vote comprenant un élément de signature ($T_4$) qui est commun à toutes les signatures émises avec un même numéro de séquence par un même membre de la liste d'électeurs du scrutin, et qui contient une preuve que le numéro de séquence m a été utilisé pour générer la signature ;

- retirer de la liste un électeur du scrutin à révoquer, et mettre à jour les paramètres de mise en oeuvre de la signature électronique anonyme propre aux membres de la liste d'électeurs du scrutin, pour tenir compte du retrait de l'électeur ; et

- mettre à jour les certificats ($[A_i, e_i]$) des électeurs du scrutin à chaque modification de la composition de la liste des électeurs du scrutin.

**14.** Terminal (2) pour émettre une signature de liste comprenant des moyens pour :

- recevoir des paramètres de calcul d'une clé privée ($x_i$) ;
- calculer (24) la clé privée ($x_i$) à l'aide des paramètres reçus et de paramètres choisis aléatoirement ;
- recevoir (25) un certificat ($[A_i, e_i]$) de membre d'une liste ;
- générer (35) une signature propre aux membres de la liste, cette signature étant construite de manière à contenir une preuve que le membre de la liste ayant émis la signature, connaît un certificat ($[A_i, e_i]$) de membre de la liste ; et
- vérifier une signature émise par un membre de la liste en appliquant un algorithme prédéfini pour mettre en évidence la preuve que la signature a été émise par une personne en possession d'un certificat de membre de la liste, **caractérisé en ce qu'**il comprend en outre des moyens pour :
- recevoir un numéro de séquence m à utiliser dans une phase de signature (30) ;
- générer une signature ($Sig_{liste}$) en calculant un élément de signature ($T_4$) qui est commun à toutes les signatures émises par un même membre de la liste avec un même numéro de séquence, et qui contient une preuve que le numéro de séquence m a été utilisé pour générer la signature ;
- vérifier la preuve que le numéro de séquence m a été utilisé pour générer une signature ; et
- recevoir un nouveau certificat ($[A_i, e_i]$) de membre de la liste à chaque modification de la composition de la liste.

**15.** Terminal (2) pour émettre une signature de bulletin de vote à un scrutin, comprenant des moyens pour :

- recevoir des paramètres de calcul d'une clé privée ($x_i$) ;
- calculer (24) la clé privée ($x_i$) à l'aide des paramètres reçus et de paramètres choisis aléatoirement ;
- recevoir (25) un certificat ($[A_i, e_i]$) de membre d'une liste d'électeurs du scrutin ;
- générer (35) une signature d'un bulletin de vote, cette signature étant construite de manière à contenir une preuve que le membre de la liste ayant émis la signature, connaît un certificat ($[A_i, e_i]$) de membre de la liste d'électeurs ; et
- vérifier une signature d'un bulletin de vote, émise par un membre de la liste d'électeur, en appliquant un algorithme prédéfini pour mettre en évidence la preuve que la signature a été émise par une personne en possession d'un certificat de membre de la liste, **caractérisé en ce qu'**il comprend en outre des moyens pour :

- recevoir un numéro de séquence m à utiliser pour signer un bulletin de vote ;
- générer une signature ($Sig_{liste}$) d'un bulletin de vote en calculant un élément de signature ($T_4$) qui est commun à toutes les signatures émises par un même membre de la liste d'électeurs avec un même numéro de séquence, et qui contient une preuve que le numéro de séquence m a été utilisé pour générer la signature ;
- vérifier la preuve que le numéro de séquence m a été utilisé pour générer une signature d'un bulletin de vote ; et
- recevoir un nouveau certificat ($[A_i, e_i]$) de membre de la liste d'électeurs à chaque modification de la composition de la liste d'électeurs.

**Claims**

1. A list signature method comprising at least:

   - one organizing phase (10) including, for a trusted third party (1), defining parameters for implementing an anonymous electronic signature, including a private key and a corresponding public key;
   - one phase of registering (20, 20') persons in a list of members authorized to generate an electronic signature specific to the members of the list, during which each person (2) to be registered calculates (24) a private key ($x_i$) by means of parameters provided by the trusted third party and of parameters randomly selected by the person to be registered, and the trusted third party delivers (25') to each person to be registered, a certificate ($[A_i, e_i]$) of membership of the list;
   - one signing phase (30) during which a member of the list generates (35) and issues (36) a signature specific to the members of the list, this signature being built so as to contain proof that the member of the list having issued the signature, knows a certificate ($[A_i, e_i]$) of membership of the list; and
   - one phase of verifying (40) the issued signature, comprising steps (41, 42) of applying a predefined algorithm in order to show proof that the signature was issued by a person having a certificate of membership of the list; **characterized in that** it further comprises:

   - a phase of defining a sequence including, for the trusted third party (1), generating a serial number in to be used in the signing phase (30), a signature ($Sig_{list}$) generated during the signing phase comprising a signature element ($T_4$) which is common to all the signatures issued by a same member of the list with a same serial number and which contains proof that the serial number m was used for generating the signature, the verifying phase (40) also comprising a step of verifying (43) the proof that the serial number m was used for generating the signature;
   - a phase of revoking a member of the list in order to remove a member from the list, during which the trusted third party (1) removes the member to be removed from the list and updates the parameters for implementing the anonymous electronic signature, in order to take into account the removal of the member from the list; and
   - a phase of updating the certificates ($[A_i, e_i]$) of the members of the list in order to take into account changes in the composition of the list.

2. The method according to claim 1, **characterized in that** the organizing phase (10) comprises the definition of a common parameter (u) depending on the composition of the list, the phase for registering (20, 20') a person in the list comprising the definition of a parameter ($u_i$) specific to the person to be registered which is calculated according to the parameter (u) depending on the composition of the list and which is integrated into the certificate ($[A_i, e_i, u_i]$) handed out to the person, the registering phase (20, 20') comprising a step of updating the common parameter (u) depending on the composition of the list, the phase of revoking a member of the list comprising a step of changing the common parameter (u) depending on the composition of the list, in order to take into account the removal of the member from the list, and the phase of updating the certificates of the members of the list including a step for updating the parameter ($u_i$) specific to each member of the list in order to take into account changes in the composition of the list.

3. The method according to claim 1 or 2, **characterized in that** a signature specific two a member of the list and having the certificate $[A_i, e_i]$ comprises parameters $T_1, T_2, T_3$, such that:

$$T_1 = =A_i b^{\omega} \pmod{n},$$

$$T_2 = g^{\omega} \pmod{n},$$

$$T_3 = g^{e_i} h^{\omega} \pmod{n},$$

$\omega$ being a number randomly selected during the signing phase (30) and b, g, h and n being general parameters for implementing the group signature, such that parameters b, g and h cannot be inferred from each other by integer power raising modulo n functions, so that the number $A_i$, and therefore the identity of the member of the list having the certificate $[A_i, e_i]$ cannot be inferred from a signature issued by the member.

4. The method according to one of claims 1 to 3, **characterized in that** the number m of a series used for generating a list signature is calculated as a function of a date of the beginning of the series.

5. The method according to claim 4, **characterized in that** the function for calculating the number of a series is of the form:

$$F(d) = (H(d))^2 \pmod{n}$$

**characterized in that** $H$ is a collision-resistant hash function, d is the date of the beginning of the series, and n is a general parameter for implementing the group signature.

6. The method according to one of claims l to 5, **characterized in that** a signature ($Sig_{list}$) issued by a member of the list contains a parameter ($T_4$) which is calculated according to the serial number and the private key ($x_i$) of the signatory member.

7. The method according to claim 6, **characterized in that** the parameter $T_4$ of a signature issued by a member of the list and depending on the serial number m and on the private key $x_i$ of the signatory member is obtained by the following formula:

$$T_4 = m^{x_i} \pmod{n}$$

n being a general parameter for implementing the group signature, and **in that** the signature comprises proof that the parameter $T_4$ was calculated with the private key $x_i$ of the member of the list who issued the signature.

8. An electronic voting method comprising a poll organization phase (50), in the course of which an organizing authority carries out the generation of parameters required for a poll, and allocates to scrutineers keys enabling them to decrypt and verify the ballots, a phase of allocating a right of signature to each of the voters, a voting phase (60) in the course of which the voters sign a ballot, and a counting phase (70) in the course of which the scrutineers verify the ballots, and calculate the result of the poll as a function of the content of the decrypted and valid ballots, **characterized in that** it implements a list signature method according to one of claims 1 to 7, for signing the ballots, each voter being registered as a member of a list, and a serial number m being generated for the poll, so as to detect whether a same voter has or has not issued several ballots for the poll.

9. The method according to claim 8, **characterized in that** the organizing phase (50) comprises the handing out to each scrutineer of a public key and a private key, **in that** the ballots ($v_i$) are encrypted (62) by means of a public key (Y) obtained by the product of the respective public keys ($y_i$) of all the scrutineers, and **in that** the corresponding decryption private key (X) is obtained by calculating the sum of the respective private keys ($x_i$) of all the scrutineers.

10. The method according to claim 9, **characterized in that** encryption (62) of the ballots is carried out by means of a probabilistic encryption algorithm.

11. The method according to one of claims 8 to 10, **characterized in that** the ballots issued by the voters are stored in a public database (4), **in that** the result of the verification and counting of each ballot is stored in the database in association with the ballot, and **in that** the private key (X) for decrypting the ballots is published.

12. A computer for implementing a list signature comprising means for:

- generating parameters for implementing an anonymous electronic signature, specific to members of a list, said parameters including a private key and a corresponding public key; and
- transmitting to each person (2) to be registered in the list parameters to be used by the person to be registered for calculating (24) a private key ($x_i$), and a certificate ([$A_i$, $e_i$]) of membership of the list;
**characterized in that** it further comprises means for:

- generating a serial number m to be used by the members of the list for issuing an anonymous signature specific to the members of the list, an anonymous signature ($Sig_{list}$) issued by a member of the list comprising a signature element ($T_4$) which is common to all the signatures issued by the same member of the list with a same serial number and which contains proof that the serial number m was used for generating the signature;
- removing from the list a member to be revoked from the list, and updating the parameters for implementing the anonymous electronic signature specific to the members of the list, in order to take into account the removal of the member from the list; and
- updating the certificates ([$A_i$, $e_i$]) of the members of the list each time the composition of the list is changed.

**13.** A computer for implementing an electronic vote comprising means for:

- generating during a poll organization phase parameters for implementing an anonymous electronic signature specific to members of a list of voters, the parameters including a private key and a corresponding public key;
- assigning keys to scrutineers, allowing them to decrypt and verify ballots issued for the poll; and
- transmitting to each member (2) of the list of voters for the poll parameters to be used by the voter for calculating (24) a private key ($x_i$) and a certificate ([$A_i$, $e_i$]) of membership of the list of voters for the poll;
**characterized in that** it further comprises means for:

- generating a serial number in specific to the poll, to be used by the members of the list of voters for signing a ballot, a signature ($Sig_{list}$) of a ballot, comprising a signature element ($T_4$) which is common to all the signatures issued with a same serial number by a same member of the list of voters for the poll and which contains proof that the serial number m was used for generating the signature;
- removing from the list a poll voter to be revoked, and updating the parameters for implementing the anonymous electronic signature specific to the members of the list of voters for the poll, in order to take into account the removal of the voter; and
- updating the certificates ([$A_i$, $e_i$]) of the poll voters each time the composition of the list of voters for the poll is changed.

**14.** A terminal (2) for issuing a list signature comprising means for:

- receiving parameters for calculating a private key ($x_i$);
- calculating (24) the private key ($x_i$) by means of the received parameters and of parameters randomly selected;
- receiving (25) a certificate ([$A_i$, $e_i$]) of membership of a list;
- generating (35) a signature specific to the members of the list, this signature being built so as to contain proof that the member of the list having issued the signature, knows a certificate ([$A_i$, $e_i$]) of membership of the list; and
- verifying a signature issued by a member of the list by applying a predefined algorithm in order to show proof that the signature was issued by a person having a certificate of membership of the list;
**characterized in that** it further comprises means for:

- receiving a serial number m to be used in a signing phase (30);
- generating a signature ($Sig_{list}$) by calculating a signature element ($T_4$) which is common to all the signatures issued by a same member of the list with a same serial number and which contains proof that the serial number in was used for generating the signature;
- verifying the proof that the serial number in was used for generating a signature; and
- receiving a new certificate ([$A_i$, $e_i$]) of membership of the list each time the composition of the list is changed.

**15.** A terminal (2) for issuing a ballot signature for a poll, comprising means for:

- receiving parameters for calculating a private key ($x_i$);
- calculating (24) the private key ($x_i$) by means of the received parameters and of parameters randomly selected;
- receiving (25) a certificate ([$A_i$, $e_i$]) of membership of a list of voters for the poll;
- generating (35) a signature for a ballot, this signature being built so as to contain proof that the member of the list having issued the signature, knows a certificate ([$A_i$, $e_i$]) of membership of the list of voters; and
- verifying a signature for a ballot issued by a member of the list by applying a predefined algorithm in order to show proof that the signature was issued by a person having a certificate of membership of the list;
**characterized in that** it further comprises means for:

- receiving a serial number m to be used for signing a ballot;
- generating a signature ($Sig_{list}$) for a ballot by calculating a signature element ($T_4$) which is common to all the signatures issued by a same member of the list of voters with a same serial number and which contains proof that the serial number m was used for generating the signature;
- verifying the proof that the serial number m was used for generating a signature for a ballot; and
- receiving a new certificate ($[A_i, e_i]$) of membership of the list of voters each time the composition of the list is changed.

**Patentansprüche**

1.  Listensignatur-Verfahren, das mindestens enthält:

    - eine Organisationsphase (10), die für eine Vertrauensinstanz (1) darin besteht, Durchführungsparameter einer anonymen elektronischen Signatur zu definieren, darunter ein privater Schlüssel und ein entsprechender öffentlicher Schlüssel,
    - eine Registrierungsphase (20, 20') von Personen in einer Mitgliederliste, die berechtigt sind, eine den Mitgliedern der Liste eigene elektronische Signatur zu generieren, während der jede zu registrierende Person (2) mit Hilfe von Parametern, die von der Vertrauensinstanz geliefert werden, und von Parametern (24), die zufällig von der zu registrierenden Person gewählt werden, einen privaten Schlüssel ($x_i$) berechnet, und die Vertrauensinstanz an jede zu registrierende Person ein Mitgliedszertifikat ($[A_i, e_i]$) der Liste liefert (25'),
    - eine Signaturphase (30), während der ein Mitglied der Liste eine den Mitgliedern der Liste eigene Signatur generiert (35) und ausgibt (36), wobei diese Signatur so konstruiert ist, dass sie einen Beweis enthält, dass das Mitglied der Liste, das die Signatur ausgegeben hat, ein Mitgliedszertifikat ($[A_i, e_i]$) der Liste kennt, und
    - eine Überprüfungsphase (40) der ausgegebenen Signatur, die Schritte (41, 42) der Anwendung eines vorab definierten Algorithmus enthält, um den Beweis hervorzuheben, dass die Signatur von einer Person ausgegeben wurde, die im Besitz eines Mitgliedzertifikats der Liste ist, **dadurch gekennzeichnet, dass** es außerdem enthält:
    - eine Phase der Definition einer Sequenz, die für die Vertrauensinstanz (1) darin besteht, eine in der Signaturphase (30) zu verwendende Sequenznummer m zu generieren, wobei eine während der Signaturphase generierte Signatur ($Sig_{liste}$) ein Signaturelement ($T_4$) enthält, das allen Signaturen gemeinsam ist, die von dem gleichen Mitglied der Liste mit der gleichen Sequenznummer ausgegeben werden, und das einen Beweis enthält, dass die Sequenznummer m verwendet wurde, um die Signatur zu generieren, wobei die Überprüfungsphase (40) außerdem einen Schritt der Überprüfung (43) des Beweises enthält, dass die Sequenznummer m zum Generieren der Signatur verwendet wurde;
    - eine Phase der Abberufung eines Mitglieds der Liste, um ein Mitglied aus der Liste zu entfernen, während der die Vertrauensinstanz (1) das zu entfernende Mitglied aus der Liste entfernt und die Durchführungsparameter der anonymen elektronischen Signatur aktualisiert, um das Entfernen des Mitglieds aus der Liste zu berücksichtigen; und
    - eine Phase der Aktualisierung der Mitgliedszertifikate ($[A_i, e_i]$) der Liste, um Änderungen der Zusammensetzung der Liste zu berücksichtigen.

2.  Verfahren nach Anspruch 1, **dadurch gekennzeichnet, dass** die Organisationsphase (10) die Definition eines von der Zusammensetzung der Liste abhängenden gemeinsamen Parameters (u) enthält, wobei die Registrierungsphase (20, 20') einer Person in der Liste die Definition eines der zu registrierenden Person eigenen Parameters ($u_i$) enthält, der in Abhängigkeit von dem von der Zusammensetzung der Liste abhängenden Parameter (u) berechnet und in das an die Person übergebene Zertifikat ($[A_i, e_i, u_i]$) integriert wird, wobei die Registrierungsphase (20, 20') einen Schritt der Aktualisierung des von der Zusammensetzung der Liste abhängenden gemeinsamen Parameters (u) enthält, wobei die Phase der Abberufung eines Mitglieds der Liste einen Schritt der Veränderung des von der Zusammensetzung der Liste abhängenden gemeinsamen Parameters (u) enthält, um das Entfernen des Mitglieds aus der Liste zu berücksichtigen, und die Aktualisierungsphase der Zertifikate der Mitglieder der Liste einen Schritt der Aktualisierung des jedem Mitglied der Liste eigenen Parameters ($u_i$) aufweist, um die Veränderungen der Zusammensetzung der Liste zu berücksichtigen.

3.  Verfahren nach Anspruch 1 oder 2, **dadurch gekennzeichnet, dass** eine einem Mitglied der Liste eigene und das Zertifikat $[A_i, e_i]$ besitzende Signatur derartige Parameter $T_1, T_2, T_3$ enthält, dass gilt:

$$T_1 = A_i b^{\omega} (\bmod\ n),$$

$$T_2 = g^{\omega} (\bmod\ n),$$

$$T_3 = g^{e_i} h^{\omega} (\bmod\ n),$$

wobei $\omega$ eine in der Signaturphase (30) zufällig gewählt Zahl ist, und b, g, h und n allgemeine Parameter der Durchführung der Gruppensignatur sind, derart, dass die Parameter b, g und h nicht durch Funktionen einer ganzzahligen Potenzierung Modulo n ineinander abgeleitet werden können, son dass die Zahl $A_i$, und somit die Identität des das Zertifikat [$A_i$, $e_i$] besitzenden Mitglieds der Liste, nicht von einer durch das Mitglied ausgegebenen Signatur abgeleitet werden kann.

4.  Verfahren nach einem der Ansprüche 1 bis 3, **dadurch gekennzeichnet, dass** die Nummer m einer Sequenz, die zur Generierung einer Listensignatur verwendet wird, in Abhängigkeit von einem Sequenz-Anfangsdatum berechnet wird.

5.  Verfahren nach Anspruch 4, **dadurch gekennzeichnet, dass** die Funktion der Berechnung der Nummer einer Sequenz folgende Form hat:

$$F(d) = (H(d))^2 (\bmod\ n)$$

in der H eine kollisionsfeste Hashfunktion, d das Anfangsdatum der Sequenz, und n ein allgemeiner Parameter der Durchführung der Gruppensignatur ist.

6.  Verfahren nach einem der Ansprüche 1 bis 5, **dadurch gekennzeichnet, dass** eine von einem Mitglied der Liste ausgegebene Signatur ($Sig_{liste}$) einen Parameter ($T_4$) enthält, der in Abhängigkeit von der Sequenznummer und vom privaten Schlüssel ($x_i$) des signierenden Mitglieds berechnet wird.

7.  Verfahren nach Anspruch 6, **dadurch gekennzeichnet, dass** der Parameter $T_4$ einer von einem Mitglied der Liste ausgegebenen Signatur, der von der Sequenznummer m und vom privaten Schlüssel $x_i$ des signierenden Mitglieds abhänge, durch die folgende Formel erhalten wird:

$$T_4 = m^{x_i} (\bmod\ n)$$

wobei n ein allgemeiner Parameter der Durchführung der Gruppensignatur ist, und dass die Signatur den Beweis enthält, dass der Parameter $T_4$ mit dem privaten Schlüssel $x_i$ des Mitglieds der Liste berechnet wurde, das die Signatur ausgegeben hat.

8.  Elektronisches Abstimmungsverfahren, das eine Phase der Organisation (50) der Wahlen, während der eine organisierende Instanz die Generierung von für eine Wahl notwendigen Parametern durchführt und Stimmenzählern Schlüssel zuweist, die es ihnen ermöglichen, Stimmzettel zu entschlüsseln und zu überprüfen, eine Phase der Zuweisung eines Signaturrechts an jeden der Wähler, eine Abstimmphase (60), während der die Wähler einen Stimmzettel signieren, und eine Auswertungsphase (70) enthält, während der die Stimmenzähler die Stimmzettel überprüfen und das Ergebnis der Wahl in Abhängigkeit vom Inhalt der entschlüsselten und gültigen Stimmzettel berechnen,
    **dadurch gekennzeichnet, dass** es ein Listensignaturverfahren nach einem der Ansprüche 1 bis 7 durchführt, um die Stimmzettel zu signieren, wobei jeder Wähler als Mitglied einer Liste registriert wird und eine Sequenznummer m für die Wahl generiert wird, um zu erfassen, ob der gleiche Wähler mehrere Stimmzettel für die Wahl ausgegeben hat oder nicht.

9.  Verfahren nach Anspruch 8, **dadurch gekennzeichnet, dass** die Organisationsphase (50) das Überreichen eines öffentlichen Schlüssels und eines privaten Schlüssels an jeden Stimmenzähler enthält, dass die Stimmzettel ($v_i$)

EP 1 523 824 B1

mit Hilfe eines öffentlichen Schlüssels (Y) verschlüsselt werden (62), der durch das Produkt der jeweiligen öffentlichen Schlüssel ($y_i$) aller Stimmenzähler erhalten wird, und dass der entsprechende private Entschlüsselungsschlüssel (X) durch Berechnen der Summe von privaten Schlüsseln ($x_i$) aller Stimmenzähler erhalten wird.

**10.** Verfahren nach Anspruch 9, **dadurch gekennzeichnet, dass** die Verschlüsselung (62) der Stimmzettel mit Hilfe eines probabilistischen Verschlüsselungsalgorithmus durchgeführt wird.

**11.** Verfahren nach einem der Ansprüche 8 bis 10, **dadurch gekennzeichnet, dass** die von den Wählern ausgegebenen Stimmzettel in einer öffentlichen Datenbank (4) gespeichert werden, dass das Ergebnis der Überprüfung und des Auszählens jedes Stimmzettels in der Datenbank in Verbindung mit dem Stimmzettel gespeichert wird, und dass der private Entschlüsselungsschlüssel (X) der Stimmzettel veröffentlicht wird.

**12.** Rechner zur Durchführung einer Listensignatur, der Einrichtungen enthält, um:

- Parameter zur Durchführung einer anonymen elektronischen Signatur zu generieren, die den Mitgliedern einer Liste eigen ist, wobei die Parameter einen privaten Schlüssel und einen entsprechenden öffentlichen Schlüssel aufweisen; und
- an jede in der Liste zu registrierende Person (2) von der zu registrierenden Person zu verwendende Parameter, um einen privaten Schlüssel ($x_i$) zu berechnen (24), und ein Mitgliedszertifikat ([$A_i$, $e_i$]) der Liste zu übertragen, **dadurch gekennzeichnet, dass** er außerdem Einrichtungen enthält, um:

- eine Sequenznummer m zu generieren, die von den Mitgliedern der Liste zu nutzen ist, um eine den Mitgliedern der Liste eigene anonyme Signatur auszugeben, wobei eine von einem Mitglied der Liste ausgegebene anonyme Signatur ($Sig_{liste}$) ein Signaturelement ($T_4$) enthält, das allen Signaturen gemeinsam ist, die von dem gleichen Mitglied der Liste mit der gleichen Sequenznummer ausgegeben werden, und das einen Beweis enthält, dass die Sequenznummer m verwendet wurde, um die Signatur zu generieren;
- aus der Liste ein aus der Liste abzuberufendes Mitglied zu entfernen und die Durchführungsparameter der den Mitgliedern der Liste eigenen anonymen elektronischen Signatur zu aktualisieren, um das Entfernen des Mitglieds aus der Liste zu berücksichtigen; und
- die Zertifikate ([$A_i$, $e_i$]) der Mitglieder der Liste bei jeder Veränderung der Zusammensetzung der Liste zu aktualisieren.

**13.** Rechner zur Durchführung eines elektronischen Abstimmungsverfahrens, der Einrichtungen enthält, um:

- während einer Organisationsphase einer Wahl Parameter der Durchführung einer den Mitgliedern einer Wählerliste eigenen anonymen elektronischen Signatur zu generieren, wobei die Parameter einen privaten Schlüssel und einen entsprechenden öffentlichen Schlüssel aufweisen;
- Stimmenzählern Schlüssel zuzuweisen, die es ermöglichen, für die Wahl ausgegebene Stimmzettel zu entschlüsseln und zu überprüfen; und
- an jedes Mitglied (2) der Wählerliste der Wahl Parameter, die vom Wähler zu verwenden sind, um einen privaten Schlüssel ($x_i$) zu berechnen (24), und ein Mitgliedszertifikat ([$A_i$, $e_i$]) der Wählerliste der Wahl zu übertragen, **dadurch gekennzeichnet, dass** er außerdem Einrichtungen enthält, um:

- eine der Wahl eigene Sequenznummer m zu generieren, die von den Mitgliedern der Wählerliste zu verwenden ist, um einen Stimmzettel zu signieren, wobei eine Signatur ($Sig_{liste}$) eines Stimmzettels ein Signaturelement ($T_4$) enthält, das allen Signaturen gemeinsam ist, die mit der gleichen Sequenznummer vom gleichen Mitglied der Wählerliste der Wahl ausgegeben werden, und das einen Beweis enthält, dass die Sequenznummer m verwendet wurde, um die Signatur zu generieren;
- von der Liste einen abzuberufenden Wähler der Wahl zu entfernen und die Parameter der Durchführung der den Mitgliedern der Wählerliste der Wahl eigenen anonymen elektronischen Signatur zu aktualisieren, um das Entfernen des Wählers zu berücksichtigen; und
- die Zertifikate ([$A_i$, $e_i$]) der Wähler der Wahl bei jeder Veränderung der Zusammensetzung der Wählerliste der Wahl zu aktualisieren.

**14.** Endgerät (2), um eine Listensignatur auszugeben, das Einrichtungen enthält, um:

- Parameter zur Berechnung eines privaten Schlüssels ($x_i$) zu empfangen;

- den privaten Schlüssel ($x_i$) mit Hilfe der empfangenen Parameter und von zufällig gewählten Parametern zu berechnen (24);
- ein Mitgliedszertifikat ($[A_i, e_i]$) einer Liste zu empfangen (25);
- eine den Mitgliedern der Liste eigene Signatur zu erzeugen (35), wobei diese Signatur so konstruiert ist, dass sie einen Beweis enthält, dass das Mitglied der Liste, das die Signatur ausgegeben hat, ein Mitgliedszertifikat ($[A_i, e_i]$) der Liste kennt; und
- eine von einem Mitglied der Liste ausgegebenen Signatur zu überprüfen, indem ein vordefinierter Algorithmus angewendet wird, um den Beweis hervorzuheben, dass die Signatur von einer Person ausgegeben wurde, die im Besitz eines Mitgliedzertifikats der Liste ist,

**dadurch gekennzeichnet, dass** es außerdem Einrichtungen enthält, um:

- eine Sequenznummer m zu empfangen, die in einer Signaturphase zu verwenden ist (30);
- eine Signatur ($Sig_{liste}$) zu generieren, indem ein Signaturelement ($T_4$) berechnet wird, das allen vom gleichen Mitglied der Liste mit der gleichen Sequenznummer ausgegebenen Signaturen gemeinsam ist, und das einen Beweis enthält, dass die Sequenznummer m verwendet wurde, um die Signatur zu generieren;
- den Beweis zu überprüfen, dass die Sequenznummer m zum Generieren einer Signatur verwendet wurde; und
- bei jeder Veränderung der Zusammensetzung der Liste ein neues Mitgliedszertifikat ($[A_i, e_i]$) der Liste zu empfangen.

**15.** Endgerät (2), um eine Stimmzettelsignatur bei einer Wahl auszugeben, das Einrichtungen enthält, um:

- Parameter zur Berechnung eines privaten Schlüssels ($x_i$) zu empfangen;
- den privaten Schlüssel ($x_i$) mit Hilfe der empfangenen Parameter und von zufällig ausgewählten Parametern zu berechnen (24);
- ein Mitgliedszertifikat ($[A_i, e_i]$) einer Wählerliste der Wahl zu empfangen (25);
- eine Signatur eines Stimmzettels zu generieren (35), wobei diese Signatur so konstruiert ist, dass sie einen Beweis enthält, dass das Mitglied der Liste, das die Signatur ausgegeben hat, ein Mitgliedszertifikat ($[A_i, e_i]$) der Wählerliste kennt; und
- eine Signatur eines Stimmzettels zu überprüfen, die von einem Mitglied der Wählerliste ausgegeben wurde, indem ein vordefinierter Algorithmus angewendet wird, um den Beweis hervorzuheben, dass die Signatur von einer Person ausgegeben wurde, die im Besitz eines Mitgliedszertifikats der Liste ist,

**dadurch gekennzeichnet, dass** es außerdem Einrichtungen enthält, um:

- eine Sequenznummer m zu empfangen, die zum Signieren eines Stimmzettels zu verwenden ist;
- eine Signatur ($Sig_{liste}$) eines Stimmzettels zu generieren, indem ein Signaturelement ($T_4$) berechnet wird, das allen von dem gleichen Mitglied der Wählerliste mit der gleichen Sequenznummer ausgegebenen Signaturen gemeinsam ist, und das einen Beweis enthält, dass die Sequenznummer m zum Generieren der Signatur verwendet wurde;
- den Beweis zu überprüfen, dass die Sequenznummer m verwendet wurde, um eine Signatur eines Stimmzettels zu generieren; und
- bei jeder Veränderung der Zusammensetzung der Wählerliste ein neues Mitgliedszertifikat ($[A_i, e_i]$) der Wählerliste zu empfangen.

Fig. 1

Fig. 2

# Fig. 3

**Utilisateur** (2)

- Enregistrement (20)
- Choix aléatoire de $\tilde{x}_i$ et $\tilde{r}$ (21)
- Calcul de $C_1$ (22)
- Génération preuve U (23)
- Calcul de $x_i$ et $C_2$ (24)
- Génération preuves V et W (25)
- $A_i$ et $e_i$ cohérents $u_i$ correct ? (26) — oui / non
- Erreur (27)
- fin

**Autorité de Confiance** (1)

- Enregistrement nouveau membre (20')
- $C_1$ et U valides ? (21') — oui / non
- Choix aléatoire de $\alpha_i$ et $\beta_i$ (22')
- $C_2$, V et W valides ? (23') — non
- Choix aléatoire de $e_i$ (24')
- Calcul de $A_i$ et $u_i$ (25')
- Enregistrement nouveau membre (26')
- fin

Transmissions : $C_1, U$ ; $\alpha_i, \beta_i$ ; $C_2, V, W$ ; $A_i, e_i, u_i$

**Utilisateur**

Émission $Sig_{liste}(M)$
30

Choix aléatoire de $\omega$, $w_1$, $w_2$, $w_3$
31

Calcul de $T_1$ à $T_7$
32

Choix aléatoire de $r_1$ à $r_9$
33

Calcul de $d_1$ à $d_9$
34

Calcul de $Sig_{liste}(M) = (c, s_1\text{-}s_9, T_{1\text{-}}T_9)$
35

Émission $Sig_{liste}(M)$
36

fin

**Fig. 4**

2

---

Vérification Signature de liste
40

Calcul de $t_1$ à $t_9$ et $c'$
41

$c = c'$ et $s_1$ à $s_9$ corrects ?
42

non → Signature non valable
45

oui

$T_4$ dans la liste des signatures émises ?
43

oui → Signature déjà émise
46

non

Signature valable
44

fin

**Fig. 5**

---

**Autorité de Confiance**

Organisation scrutin
50

Choix numéro de séquence
51

Génération clés privées scrutateurs et clé publique Y
52

fin

1

**Fig. 6**

Utilisateur

Emission vote — 60

Sélection vote $v_i$ — 61

Chiffrement vote $v_i$ = $D_i(a_i, b_i)$ — 62

Calcul signature $S_i = Sig_{liste}(a_i \| b_i)$ — 63

Stockage $(D_i, S_i)$ — 64

fin

2

Fig. 7

Scrutateurs

Dépouillement scrutin — 70

Calcul clé privée de déchiffrement X — 71

Lecture bulletins de vote — 72

Pour chaque vote $(D_i, S_i)$ émis — 73

Vérification de $S_i$ — 74

$S_i$ valable ?  non

oui

Déchiffrement de $D_i$ à l'aide de X — 76

Stockage $v_i$ — 77

Calcul résultat du scrutin — 78

fin

3

Fig. 8

**EP 1 523 824 B1**

**Littérature non-brevet citée dans la description**

- A Practical and Provably Secure Coalition-Résistant Group Signature Scheme. Advance in Cryptology - CRYPTO 2000. Springer-Verlag, 2000, vol. 1880, 255-270